(19) Europäisches Patentamt
European Patent Office
Office européen des brevets

(11) EP 4 442 666 A1

(12) **EUROPEAN PATENT APPLICATION**
published in accordance with Art. 153(4) EPC

(43) Date of publication:
**09.10.2024 Bulletin 2024/41**

(21) Application number: **22901360.2**

(22) Date of filing: **30.11.2022**

(51) International Patent Classification (IPC):
***C03C 27/12*** *(2006.01)* ***B32B 17/10*** *(2006.01)*
***B32B 27/20*** *(2006.01)* ***B32B 27/22*** *(2006.01)*

(52) Cooperative Patent Classification (CPC):
**B32B 17/00; B32B 17/10; B32B 27/20; B32B 27/22**

(86) International application number:
**PCT/JP2022/044166**

(87) International publication number:
**WO 2023/100928 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2021 JP 2021195607**

(71) Applicant: **SEKISUI CHEMICAL CO., LTD.**
**Osaka-shi**
**Osaka**
**530-8565 (JP)**

(72) Inventors:
- **OKAJIMA, Moyuru**
  **Kouka-shi, Shiga 528-8585 (JP)**
- **NOHARA, Atsushi**
  **Kouka-shi, Shiga 528-8585 (JP)**
- **SUGAMI, Yuitsu**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

(54) **INTERMEDIATE FILM FOR LAMINATED GLASS AND LAMINATED GLASS**

(57) Provided is an interlayer film for laminated glass capable of suppressing color migration and enhancing the handling property of the interlayer film. An interlayer film for laminated glass according to the present invention contains a thermoplastic resin, a first plasticizer having a solubility parameter of less than 18.0 $(J/cm^3)^{0.5}$, and a second plasticizer having a solubility parameter of 18.0 $(J/cm^3)^{0.5}$ or more.

[FIG. 1]

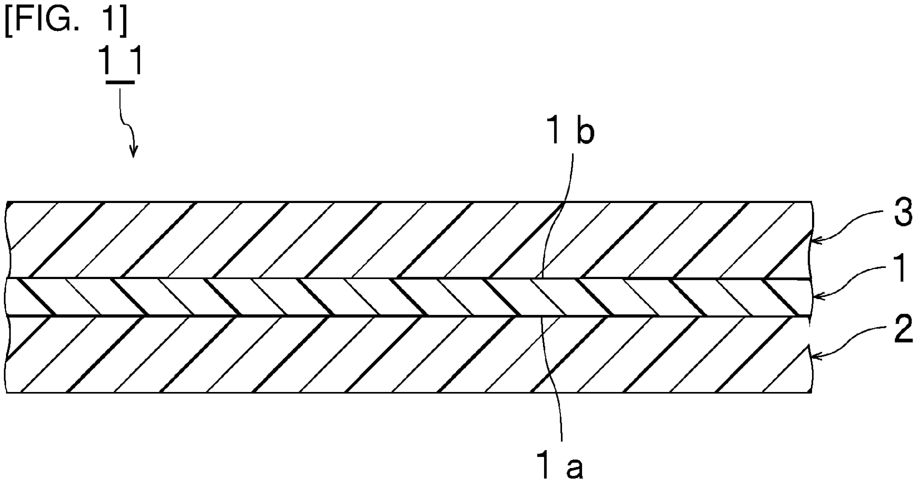


EP 4 442 666 A1

## Description

### TECHNICAL FIELD

The present invention relates to an interlayer film for laminated glass that is used for obtaining laminated glass. Moreover, the present invention relates to a laminated glass prepared with the interlayer film for laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates.

Also, an interlayer film containing a coloring agent is known (for example, Patent Document 1 below).

### Related Art Document

### Patent Document

Patent Document 1: JP 2018-187929 A

### SUMMARY OF THE INVENTION

### PROBLEMS TO BE SOLVED BY THE INVENTION

As an interlayer film containing a coloring agent, an interlayer film having only a colored layer, an interlayer film having a colored layer and a non-colored layer and so on are known. As an interlayer film containing a coloring agent, for example, an interlayer film having a shading region, an interlayer film having a gradation region and so on are recited.

However, in a conventional interlayer film containing a coloring agent, the coloring agent gradually migrates to an unintended region and color migration sometimes occurs during storage of the interlayer film.

Also, contact between an interlayer film not containing a coloring agent and an interlayer film containing a coloring agent can cause color migration to the interlayer film not containing a coloring agent. Although generally the operation procedure is provided so that the interlayer film containing a coloring agent and the interlayer film not containing a coloring agent do not come into contact with each other to prevent color migration to the interlayer film not containing a coloring agent, suppression of color migration to the interlayer film not containing a coloring agent, if possible, will contribute to simplification of the operation procedure and the operation space.

The present inventors found that color migration can be suppressed by using a plasticizer having high polarity as a plasticizer contained in the interlayer film. However, the glass transition temperature of the interlayer film tends to be large when a plasticizer having high polarity is simply used. Therefore, when the plasticizer having high polarity is simply used, the handling property of the interlayer film deteriorates, for example, film slipping occurs when the interlayer film is formed into a roll, and the operability of cutting off the interlayer film sticking out from the end part of the glass member in production of laminated glass (operability of trim cutting) deteriorates.

It is an object of the present invention to provide an interlayer film for laminated glass capable of suppressing color migration and enhancing the handling property of the interlayer film. It is also an object of the present invention to provide a laminated glass prepared with the interlayer film for laminated glass.

### MEANS FOR SOLVING THE PROBLEMS

According to a broad aspect of the present invention, there is provided an interlayer film for laminated glass (hereinafter, also referred to as an interlayer film) containing a thermoplastic resin, a first plasticizer having a solubility parameter of less than 18.0 $(J/cm^3)^{0.5}$, and a second plasticizer having a solubility parameter of 18.0 $(J/cm^3)^{0.5}$ or more.

In a specific aspect of the interlayer film according to the present invention, the interlayer film includes a layer X containing the first plasticizer and the second plasticizer.

In a specific aspect of the interlayer film according to the present invention, the first plasticizer has a solubility parameter of 15.0 $(J/cm^3)^{0.5}$ or more, and the second plasticizer has a solubility parameter of 18.5 $(J/cm^3)^{0.5}$ or more and 30.0 $(J/cm^3)^{0.5}$ or less.

In a specific aspect of the interlayer film according to the present invention, an absolute value of difference

between solubility parameter of the second plasticizer and solubility parameter of the first plasticizer is 0.5 $(J/cm^3)^{0.5}$ or more.

In a specific aspect of the interlayer film according to the present invention, the first plasticizer is triethylene glycol di-2-ethylhexanoate, triethylene glycol di-2-ethylbutyrate, or triethylene glycol di-n-butanoate.

In a specific aspect of the interlayer film according to the present invention, the second plasticizer is trimethylolpropane, triethylene glycol, 3-(2-ethylhexyloxy)-1,2-propanediol, or polycaprolactone triol represented by the following formula (P).

[Chemical 1]

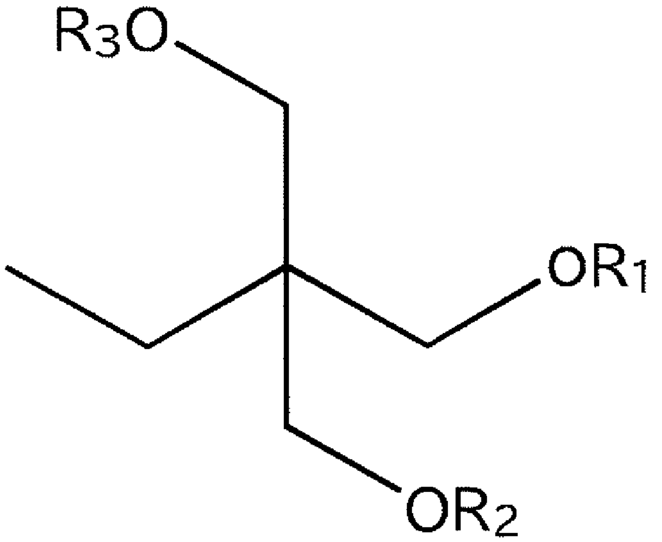

···(P)

In the formula (P), $R_1$ to $R_3$ each represent a group represented by the following formula (P1).

[Chemical 2]

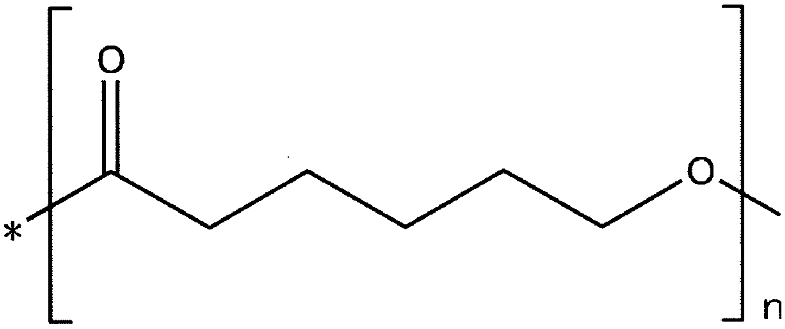

···(P1)

In the formula (P1), n represents a numeral of 1 or more and 5 or less, and * represents a bonding position with an oxygen atom.

In a specific aspect of the interlayer film according to the present invention, the interlayer film includes a layer X containing the first plasticizer and the second plasticizer, and in 100% by weight of the plasticizer contained in the layer X, a content of the second plasticizer is 20% by weight or more and 80% by weight or less.

In a specific aspect of the interlayer film according to the present invention, the interlayer film includes a layer X containing the first plasticizer and the second plasticizer, and the layer X includes the thermoplastic resin, and an absolute value of difference between solubility parameter of the thermoplastic resin contained in the layer X and solubility parameter of the second plasticizer contained in the layer X is 9.0 $(J/cm^3)^{0.5}$ or less.

In a specific aspect of the interlayer film according to the present invention, the interlayer film contains a coloring agent.

In a specific aspect of the interlayer film according to the present invention, the coloring agent is a dye.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

## EFFECT OF THE INVENTION

An interlayer film for laminated glass according to the present invention contains a thermoplastic resin, a first plasticizer having a solubility parameter of less than 18.0 $(J/cm^3)^{0.5}$, and a second plasticizer having a solubility parameter of 18.0 $(J/cm^3)^{0.5}$ or more. In the interlayer film for laminated glass according to the present invention, since the above configuration is provided, it is possible to suppress color migration, and it is possible to enhance the handling property of the interlayer film.

## BRIEF DESCRIPTION OF DRAWINGS

[Fig. 1] Fig. 1 is a sectional view schematically showing an interlayer film for laminated glass in accordance with a first embodiment of the present invention.

[Fig. 2] Fig. 2 is a sectional view schematically showing an interlayer film for laminated glass in accordance with a second embodiment of the present invention.

[Fig. 3] Figs. 3(a) and (b) are a sectional view and a front view, respectively, schematically showing an interlayer film for laminated glass, in accordance with a third embodiment of the present invention.

[Fig. 4] Fig. 4 is a sectional view schematically showing an example of laminated glass prepared with the interlayer film for laminated glass shown in Fig. 1.

[Fig. 5] Fig. 5 is a sectional view schematically showing an example of laminated glass prepared with the interlayer film for laminated glass shown in Fig. 2.

## MODES FOR CARRYING OUT THE INVENTION

Hereinafter, the details of the present invention will be described.

(Interlayer film for laminated glass)

The interlayer film for laminated glass (in the present specification, sometimes abbreviated as "interlayer film") according to the present invention is used for laminated glass.

The interlayer film according to the present invention has a one-layer structure or a two or more-layer structure. The interlayer film according to the present invention may have a one-layer structure and may have a two or more-layer structure. The interlayer film according to the present invention may have a two-layer structure, may have a two or more-layer structure, may have a three-layer structure, and may have a three or more-layer structure. The interlayer film according to the present invention may include only a first layer. The interlayer film according to the present invention may have a ten or less-layer structure, or may have a five or less-layer structure. The interlayer film according to the present invention may include, a first layer, and a second layer arranged on a first surface side of the first layer. The interlayer film according to the present invention may include a first layer, a second layer arranged on a first surface side of the first layer, and a third layer arranged on a second surface side opposite to the first surface of the first layer. The interlayer film according to the present invention may be a single-layered interlayer film and may be a multi-layered interlayer film. The structure of the interlayer film according to the present invention may partially vary. For example, the interlayer film according to the present invention may have a part having a one-layer structure, and a part having a multi-layer structure.

The interlayer film according to the present invention may have a shading region. The shading region can be formed, for example, by using a coloring agent. The interlayer film according to the present invention may have a region that is colored (colored region) and a region that is not colored (non-colored region) in the plan view.

An interlayer film for laminated glass according to the present invention contains a thermoplastic resin, a first plasticizer having a solubility parameter of less than 18.0 $(J/cm^3)^{0.5}$, and a second plasticizer having a solubility parameter of 18.0 $(J/cm^3)^{0.5}$ or more.

In the interlayer film according to the present invention, since the above configuration is provided, it is possible to suppress color migration, and it is possible to enhance the handling property of the interlayer film.

In the interlayer film according to the present invention, when the interlayer film contains a coloring agent, the coloring agent is less likely to migrate to an unintended region and color migration can be suppressed during storage of the interlayer film. Also, in the interlayer film according to the present invention, even if the interlayer film not containing a coloring agent comes into contact with an interlayer film containing a coloring agent, it is possible to suppress color migration from the interlayer film containing the coloring agent.

Also, in the interlayer film according to the present invention, since the glass transition temperature of the interlayer film can be reduced moderately, it is possible to enhance the handling property of the interlayer film.

It is preferred that the interlayer film include a layer X containing the first plasticizer and the second plasticizer.

In the interlayer film, the first layer may be the layer X, the second layer may be the layer X, and the third layer may be the layer X. When the interlayer film includes a plurality of layers X, the layers X may have compositions that are different from each other.

When the interlayer film is a single-layered interlayer film including only the first layer, the first layer is the layer X. When the interlayer film is a multi-layered interlayer film having a two or more-layer structure, it is preferred that the interlayer film include at least one layer X.

The layer X may be a surface layer or may be an intermediate layer in the interlayer film. The layer X may form a surface layer and an intermediate layer in the interlayer film. The layer X may form all layers in the interlayer film. The layer X may form a shading region.

Hereinafter, specific embodiments of the present invention will be described with reference to the drawings.

Fig. 1 is a sectional view schematically showing an interlayer film for laminated glass in accordance with a first embodiment of the present invention. In Fig. 1, a section in the thickness direction of an interlayer film 11 is shown.

The interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 includes a first layer 1, a second layer 2, and a third layer 3. The second layer 2 is arranged on a first surface 1a of the first layer 1 to be layered thereon. The third layer 3 is arranged on a second surface 1b opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

The first layer 1 is a layer X containing a thermoplastic resin, a first plasticizer, a second plasticizer and a coloring agent. The second layer 2 and the third layer 3 are layers X containing the thermoplastic resin, the first plasticizer, and the second plasticizer. The first layer 1 is a colored layer, the second layer 2 and the third layer 3 are transparent layers, and non-colored layers. In the interlayer film 11, the coloring agent contained in the first layer 1 is less likely to migrate to the second layer 2 and the third layer 3, and color migration is suppressed.

In this connection, other layers may be arranged between the second layer 2 and the first layer 1 and between the first layer 1 and the third layer 3, respectively. Examples of other layers include a layer containing polyethylene terephthalate and the like. It is preferred that the second layer 2 and the first layer 1, and the first layer 1 and the third layer 3 be directly layered, respectively.

Fig. 2 is a sectional view schematically showing an interlayer film for laminated glass in accordance with a second embodiment of the present invention. In Fig. 2, a section in the thickness direction of an interlayer film 11A is shown.

The interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass. The interlayer film 11A is a layer X containing the thermoplastic resin, the first plasticizer, and the second plasticizer.

Figs. 3(a) and (b) show a sectional view and a front view schematically showing an interlayer film for laminated glass in accordance with a third embodiment of the present invention. Fig. 3(a) is a sectional view along the line I-I in Fig. 3 (b). In Fig. 3(a), a section in the thickness direction of an interlayer film 11B is shown.

The interlayer film 11B is a multi-layered interlayer film having a two or more-layer structure. The interlayer film 11B includes a first layer 1B, a second layer 2B, and a third layer 3B. The second layer 2B is arranged on a first surface of the first layer 1B to be layered thereon. The third layer 3B is arranged on a second surface opposite to the first surface of the first layer 1B to be layered thereon. The first layer 1B is an intermediate layer. Each of the second layer 2B and the third layer 3B is a protective layer and is a surface layer in the present embodiment. The first layer 1B is arranged between the second layer 2B and the third layer 3B to be sandwiched therebetween. Accordingly, the interlayer film 11B has a multilayer structure (second layer 2B/first layer 1B/third layer 3B) in which the second layer 2B, the first layer 1B, and the third layer 3B are layered in this order.

The interlayer film 11B has one end 11a and the other end 11b being at an opposite side of the one end 11a. The one end 11a and the other end 11b are end parts of both sides facing each other. The sectional shape in the thickness direction of each of the first layer 1B, the second layer 2B, and the third layer 3B is a wedge-like shape. The

thicknesses of the first layer 1B, the second layer 2B, and the third layer 3B are larger in the other end 11b side than in the one end 11a side. Accordingly, the thickness of the other end 11b of the interlayer film 11B is larger than the thickness of the one end 11a thereof. Accordingly, the interlayer film 11B has a region being thinner in thickness and a region being thicker in thickness.

The interlayer film 11B has a region for display R1 corresponding to a display region of a head-up display. The interlayer film 11B has a surrounding region R2 neighboring the region for display R1. The interlayer film 11B has a shading region R3 that is separate from the region for display R1. The shading region R3 is located in an edge portion of the interlayer film 11B.

The first layer 1B is a layer X containing the thermoplastic resin, the first plasticizer, the second plasticizer and the coloring agent. The second layer 2B and the third layer 3B are layers X containing the thermoplastic resin, the first plasticizer, and the second plasticizer. In the interlayer film 11B, since migration of the coloring agent can be suppressed, it is possible to suppress discoloration of the shading region.

The sectional shape in the thickness direction of the first layer may be a rectangular shape, or may be a wedge-like shape. The sectional shape in the thickness direction of the second layer may be a rectangular shape, or may be a wedge-like shape. The sectional shape in the thickness direction of the third layer may be a rectangular shape, or may be a wedge-like shape. The sectional shape in the thickness direction of the layer X may be a rectangular shape, or may be a wedge-like shape.

Hereinafter, the details of the first layer, the second layer and the third layer which constitute the interlayer film according to the present invention, and the details of each ingredient contained in the first layer, the second layer and the third layer will be described.

(Thermoplastic resin)

The interlayer film contains a thermoplastic resin (hereinafter, sometimes described as a thermoplastic resin (0)). It is preferred that the interlayer film contain a polyvinyl acetal resin (hereinafter, sometimes described as a polyvinyl acetal resin (0)) as the thermoplastic resin (0). It is preferred that the first layer contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). It is preferred that the layer X contain a thermoplastic resin (hereinafter, sometimes described as a thermoplastic resin (4)). It is preferred that the layer X contain a polyvinyl acetal resin (hereinafter, sometimes described as a polyvinyl acetal resin (4)) as the thermoplastic resin (4). The thermoplastic resin (1), the thermoplastic resin (2), the thermoplastic resin (3), and the thermoplastic resin (4) may be the same or different from one another. For still higher sound insulating property, it is preferred that the thermoplastic resin (1) be different from the thermoplastic resin (2) and the thermoplastic resin (3). Each of the polyvinyl acetal resin (1), the polyvinyl acetal resin (2), the polyvinyl acetal resin (3), and the polyvinyl acetal resin (4) may be the same or different from one another. For still higher sound insulating property, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), the thermoplastic resin (3), and the thermoplastic resin (4) may be used alone and two or more kinds thereof may be used in combination. One kind of each of the polyvinyl acetal resin (0), the polyvinyl acetal resin (1), the polyvinyl acetal resin (2), the polyvinyl acetal resin (3), and the polyvinyl acetal resin (4) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, a (meth)acrylic resin, a polyolefin resin, an ionomer resin, a polyvinyl alcohol resin, and the like. Thermoplastic resins other than these may be used.

An absolute value of difference between solubility parameter (SP value) of the thermoplastic resin contained in the layer X, and solubility parameter (SP value) of the second plasticizer contained in the layer X is preferably 9.0 $(J/cm^3)^{0.5}$ or less, more preferably 6.5 $(J/cm^3)^{0.5}$ or less, further preferably 3.0 $(J/cm^3)^{0.5}$ or less. When the absolute value of difference is the above upper limit or less, it is possible to further enhance the compatibility between the thermoplastic resin and the second a plasticizer. The absolute value of difference may be 0.1 $(J/cm^3)^{0.5}$ or more, or may be 1.0 $(J/cm^3)^{0.5}$ or more. Solubility parameter (SP value) of the thermoplastic resin contained in the aforementioned layer X may be larger than, may be smaller than, or may be the same as solubility parameter (SP value) of the second plasticizer contained in the layer X.

The method of calculating solubility parameter (SP value) of a plasticizer is described later. Solubility parameter (SP value) of thermoplastic resin can be determined in the following manner. First, using a thermoplastic resin, and

twenty-two solvents whose Hansen solubility parameters are known, the following solubility test is conducted. Next, using Sphere program of software "HSPiP 4th Edition 4.1.07" that is available from the Internet, and assuming a single solubility sphere, Hansen solubility parameter (dispersion term (dD), polarization term (dP) and hydrogen bond term (dH)) of the thermoplastic resin is calculated from the result of the aforementioned solubility test. Hildebrand SP value (δ) calculated by the following formula (1) from the obtained dispersion term (dD), polarization term (dP) and hydrogen bond term (dH), is defined as solubility parameter (SP value) of the thermoplastic resin.

$$\text{SP value } (\delta) = ((dD)^2 + (dP)^2 + (dH)^2)^{0.5} \cdots \text{Formula (1)}$$

When fitting is impossible with a single solubility sphere, Double Sphere is assumed by Generic Algorithm of the above software, and fitting is conducted with two solubility spheres. Of the obtained two solubility spheres, dispersion term (dD), polarization term (dP) and hydrogen bond term (dH) in the sphere in which contribution of polarization term (dP) and hydrogen bond term (dH) is larger are defined as Hansen solubility parameter of the thermoplastic resin. From the value of each term, Hildebrand SP value (δ) is calculated using the aforementioned formula (1) and defined as solubility parameter (SP value) of thermoplastic resin.

Solubility test:

Two hundred milligrams of thermoplastic resin molded into a sheet-like shape was sampled, and dissolved and swelled by stirring in 10 mL of each solvent shown below at normal temperature for 72 hours. The sample completely dissolved, and the sample that is not completely dissolved but dissolved to such a degree that the original form is lost are respectively rated at Ranks 1, 2. The sample showing a swelling rate of 1000% or more, the sample showing a swelling rate of 100% or more and less than 1000%, the sample showing a swelling rate of 10% or more and less than 100%, and the sample showing a swelling rate of less than 10% are respectively rated at Ranks 3, 4, 5, 6. Ranks 1, 2, 3 are labelled "soluble", and Ranks 4 or higher are labelled "insoluble". Ranks 1, 2 are judged by visual observation, and for Ranks 3, 4, 5, 6, a sample weight (w1) before solubility test and a sample weight (w2) after solubility test are measured, and 100 × (w2 - w1)/w1 (%) is calculated as a swelling rate.

Twenty-two solvents used in solubility test:

Benzaldehyde, 2-butoxyethanol, acrylic acid, ethyl acetate, acetone, toluene, THF, methanol, ethanol, IPA, 1-butanol, xylene, hexane, a mixed solvent in which ethylene carbonate and diethyl carbonate are mixed at a volume ratio of 1 : 1, 2-ethylhexanal, triethylene glycol di-2-ethylhexanoate (3GO), N,N-dimethylformamide, ethylene glycol, methylethyl ketone, 1-methyl-2-pyrrolidone, diethylene glycol, and water

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of the laminated glass is further enhanced. When the average polymerization degree is the aforementioned upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the interlayer film is sufficiently lowered. The number of carbon atoms of the acetal group in the polyvinyl acetal resin may be 4 or 5.

The aldehyde is not particularly limited. In general, an aldehyde having 1 to 10 carbon atoms is suitably used. Examples of the aldehyde having 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin (0) is preferably 15% by mole or more, more preferably 18% by mole or more and is preferably 40% by mole or less, more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

A content of the hydroxyl group (the amount of hydroxyl groups) of the polyvinyl acetal resin (1) is preferably 17% by mole or more, more preferably 20% by mole or more, further preferably 22% by mole or more and is preferably 28% by mole or less, more preferably 27% by mole or less, further preferably 25% by mole or less, especially preferably 24% by mole or less. When the content of the hydroxyl group is the aforementioned lower limit or more, the mechanical strength of the interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating property of laminated glass is further enhanced. Moreover, when the content of the hydroxyl group is the above upper limit or less, the flexibility of the interlayer film is enhanced and the handling of the interlayer film is facilitated.

A preferred range of the content of the hydroxyl group of the polyvinyl acetal resin (4) when the layer X is not a surface layer of the interlayer film, is the same as a preferred range of the content of the hydroxyl group of the polyvinyl acetal resin (1).

The content of the hydroxyl group (hydroxyl group amount) of the polyvinyl acetal resin (2) and the polyvinyl acetal resin (3) is preferably 25% by mole or more, more preferably 28% by mole or more, more preferably 30% by mole or more, still more preferably 31.5% by mole or more, further preferably 32% by mole or more, especially preferably 33% by mole or more. The content of the hydroxyl group (hydroxyl group amount) of the polyvinyl acetal resin (2) and the polyvinyl acetal resin (3) is preferably 38% by mole or less, more preferably 37% by mole or less, further preferably 36.5% by mole or less, especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

A preferred range of the content of the hydroxyl group of the polyvinyl acetal resin (4) when the layer X is a surface layer of the interlayer film, is the same as a preferred range of the content of the hydroxyl group of the polyvinyl acetal resin (2) and the polyvinyl acetal resin (3) .

From the viewpoint of further enhancing the sound insulating property, it is preferred that the content of the hydroxyl group of the polyvinyl acetal resin (1) be lower than the content of the hydroxyl group of the polyvinyl acetal resin (2). From the viewpoint of further enhancing the sound insulating property, it is preferred that the content of the hydroxyl group of the polyvinyl acetal resin (1) be lower than the content of the hydroxyl group of the polyvinyl acetal resin (3). An absolute value of difference between the content of the hydroxyl group of the polyvinyl acetal resin (1) and the content of the hydroxyl group of the polyvinyl acetal resin (2) is defined as absolute value A, and an absolute value of difference between the content of the hydroxyl group of the polyvinyl acetal resin (1) and the content of the hydroxyl group of the polyvinyl acetal resin (3) is defined as absolute value B. From the viewpoint of further enhancing the sound insulating property, each of the absolute value A and the absolute value B is preferably 1% by mole or more, more preferably 5% by mole or more, further preferably 9% by mole or more, especially preferably 10% by mole or more, most preferably 12% by mole or more. Each of the absolute value A and the absolute value B is preferably 20% by mole or less.

When the layer X is not a surface layer of the interlayer film, from the viewpoint of further enhancing the sound insulating property, it is preferred that the content of the hydroxyl group of the polyvinyl acetal resin (4) be lower than the content of the hydroxyl group of the polyvinyl acetal resin (2). When the layer X is not a surface layer of the interlayer film, from the viewpoint of further enhancing the sound insulating property, it is preferred that the content of the hydroxyl group of the polyvinyl acetal resin (4) be lower than the content of the hydroxyl group of the polyvinyl acetal resin (3). An absolute value of difference between the content of the hydroxyl group of the polyvinyl acetal resin (4) and the content of the hydroxyl group of the polyvinyl acetal resin (2) is defined as absolute value C, and an absolute value of difference between the content of the hydroxyl group of the polyvinyl acetal resin (4) and the content of the hydroxyl group of the polyvinyl acetal resin (3) is defined as absolute value D. From the viewpoint of further enhancing the sound insulating property, each of the absolute value C and the absolute value D is preferably 1% by mole or more, more preferably 5% by mole or more, further preferably 9% by mole or more, especially preferably 10% by mole or more, most preferably 12% by mole or more. Each of the absolute value C and the absolute value D is preferably 20% by mole or less.

When the layer X is a surface layer of the interlayer film, from the viewpoint of further enhancing the sound insulating property, it is preferred that the content of the hydroxyl group of the polyvinyl acetal resin (1) be lower than the content of the hydroxyl group of the polyvinyl acetal resin (4). When the layer X is a surface layer of the interlayer

film, from the viewpoint of further enhancing the sound insulating property, it is preferred that the following absolute value be satisfied. An absolute value of difference between the content of the hydroxyl group of the polyvinyl acetal resin (1) and the content of the hydroxyl group of the polyvinyl acetal resin (4) is preferably 1% by mole or more, more preferably 5% by mole or more, further preferably 9% by mole or more, especially preferably 10% by mole or more, most preferably 12% by mole or more. An absolute value of difference between the content of the hydroxyl group of the polyvinyl acetal resin (1) and the content of the hydroxyl group of the polyvinyl acetal resin (4) is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced. In particular, when the acetylation degree of the polyvinyl acetal resin (1) is 0.1% by mole or more and is 25% by mole or less, the resulting laminated glass is excellent in penetration resistance.

A preferred range of the acetylation degree of the polyvinyl acetal resin (4) when the layer X is not a surface layer of the interlayer film, is the same as a preferred range of the acetylation degree of the polyvinyl acetal resin (1).

The acetylation degree (acetyl group amount) of each of the polyvinyl acetal resin (2) and the polyvinyl acetal resin (3) is preferably 0.01% by mole or more, more preferably 0.5% by mole or more, and is preferably 10% by mole or less, more preferably 2% by mole or less. When the acetylation degree is the above lower limit or more, the compatibility between the polyvinyl acetal resin and a plasticizer is enhanced. When the acetylation degree is the aforementioned upper limit or less, the moisture resistance of the interlayer film and laminated glass is enhanced.

A preferred range of the acetylation degree of the polyvinyl acetal resin (4) when the layer X is a surface layer of the interlayer film, is the same as a preferred range of the acetylation degree of the polyvinyl acetal resin (2) and the polyvinyl acetal resin (3).

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more, more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more, more preferably 60% by mole or more, and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

A preferred range of the acetalization degree of the polyvinyl acetal resin (4) when the layer X is not a surface layer of the interlayer film, is the same as a preferred range of the acetalization degree of the polyvinyl acetal resin (1).

The acetalization degree of the polyvinyl acetal resin (2) and the polyvinyl acetal resin (3) (the butyralization degree in the case of a polyvinyl butyral resin) is preferably 55% by mole or more and more preferably 60% by mole or more and is preferably 75% by mole or less and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

A preferred range of the acetalization degree of the polyvinyl acetal resin (4) when the layer X is a surface layer of the interlayer film, is the same as a preferred range of the acetalization degree of the polyvinyl acetal resin (2) and the polyvinyl acetal resin (3).

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

In 100% by weight of the thermoplastic resin contained in the interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the interlayer film, the content of the polyvinyl acetal resin is preferably 100% by weight or less. It is preferred that the main ingredient (50% by weight or more) of the thermoplastic resin of the interlayer film be a polyvinyl acetal resin.

In 100% by weight of the thermoplastic resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first layer, the content of the polyvinyl acetal resin is preferably 100% by weight or less. It is preferred that the main ingredient (50% by weight or more) of the thermoplastic resin of the first layer be a polyvinyl acetal resin.

In 100% by weight of the thermoplastic resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second layer, the content of the polyvinyl acetal resin is preferably 100% by weight or less. It is preferred that the main ingredient (50% by weight or more) of the thermoplastic resin of the second layer be a polyvinyl acetal resin.

In 100% by weight of the thermoplastic resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the third layer, the content of the polyvinyl acetal resin is preferably 100% by weight or less. It is preferred that the main ingredient (50% by weight or more) of the thermoplastic resin of the third layer be a polyvinyl acetal resin.

In 100% by weight of the thermoplastic resin contained in the layer X, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the layer X, the content of the polyvinyl acetal resin is preferably 100% by weight or less. It is preferred that the main ingredient (50% by weight or more) of the thermoplastic resin of the layer X be a polyvinyl acetal resin.

(Plasticizer)

The interlayer film contains a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the interlayer film is a polyvinyl acetal resin, it is especially preferred that the interlayer film (the respective layers) contain a plasticizer. It is preferred that a layer containing a polyvinyl acetal resin contain a plasticizer.

As shown below, various plasticizers exist.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

Among various existing plasticizers, a plasticizer having a solubility parameter (SP value) of less than 18.0 $(J/cm^3)^{0.5}$ (first plasticizer) and a plasticizer having a solubility parameter (SP value) of 18.0 $(J/cm^3)^{0.5}$ or more (second plasticizer) are used in the present invention.

The solubility parameter (SP value) of the plasticizer (the first plasticizer and the second plasticizer) can be calculated in the following manner. First, from the molecular structure of the plasticizer, Hansen solubility parameter (dispersion term (dD), polarization term (dP) and hydrogen bond term (dH)) are calculated using Y-MB function of software "HSPiP". Next, from the obtained Hansen solubility parameter (dispersion term (dD), polarization term (dP) and hydrogen bond term (dH)), Hildebrand solubility parameter (δ) is calculated by the following formula (2). The Hildebrand solubility parameter (δ) is defined as solubility parameter (SP value) of the plasticizer.

$$\text{SP value } (\delta) = ((dD)^2 + (dP)^2 + (dH)^2)^{0.5} \quad \cdots \text{ Formula (2)}$$

<First plasticizer>

The interlayer film contains the first plasticizer (hereinafter, sometimes described as a first plasticizer (0)) having a solubility parameter (SP value) of less than 18.0 $(J/cm^3)^{0.5}$. The first plasticizer is a plasticizer having relatively small polarity. It is preferred that the first layer contain the first plasticizer (hereinafter, sometimes described as first plasticizer (1)). It is preferred that the second layer contain the first plasticizer (hereinafter, sometimes described as first plasticizer (2)). It is preferred that the third layer contain the first plasticizer (hereinafter, sometimes described as first plasticizer (3)). The layer X contains the first plasticizer (hereinafter, sometimes described as first plasticizer (4)). The first plasticizer (1), the first plasticizer (2), the first plasticizer (3), and the first plasticizer (4) may be the same or different from one another. One kind of the first plasticizer may be used alone and two or more kinds thereof may be used in combination.

Solubility parameter (SP value) of the first plasticizer is preferably 15.0 $(J/cm^3)^{0.5}$ or more, more preferably 16.0 $(J/cm^3)^{0.5}$ or more, and is preferably 17.5 $(J/cm^3)^{0.5}$ or less. When the solubility parameter (SP value) of the first plasticizer is the above lower limit or more and the above upper limit or less, it is possible to exert the effect of the present invention more effectively.

As the first plasticizer, triethylene glycol di-2-ethylhexanoate(3GO), triethylene glycol di-2-ethylbutyrate(3GH), and triethylene glycol di-n-butanoate and so on are recited. As the first plasticizer, a plasticizer other than the aforementioned plasticizers may be used.

It is preferred that the first plasticizer be triethylene glycol di-2-ethylhexanoate, triethylene glycol di-2-ethylbutyrate, or triethylene glycol di-n-butanoate. In this case, the effect of the present invention can be exerted more effectively.

The content of the first plasticizer (0) per 100 parts by weight of the thermoplastic resin (0) in the interlayer film is defined as first content (0). The first content (0) is preferably 2 parts by weight or more, more preferably 8 parts by weight or more, further preferably 15 parts by weight or more, and is preferably 80 parts by weight or less, more preferably

50 parts by weight or less, further preferably 35 parts by weight or less. When the first content (0) is the above lower limit or more, the penetration resistance of laminated glass is further enhanced, and handling property of the interlayer film can be further enhanced. When the first content (0) is the above upper limit or less, the transparency of the interlayer film is further enhanced, and color migration can be suppressed more effectively.

In the first layer, the content of the first plasticizer (1) per 100 parts by weight of the thermoplastic resin (1) is defined as first content (1). The first content (1) is preferably 15 parts by weight or more, more preferably 20 parts by weight or more, further preferably 30 parts by weight or more, and is preferably 80 parts by weight or less, more preferably 70 parts by weight or less, further preferably 60 parts by weight or less, especially preferably 50 parts by weight or less. When the first content (1) is the above lower limit or more, the flexibility of the interlayer film is enhanced, and handling property of the interlayer film can be further enhanced. When the first content (1) is the above upper limit or less, the penetration resistance of laminated glass is further enhanced, and color migration can be suppressed more effectively.

When the layer X is not a surface layer of the interlayer film, a preferred range of the content of the first plasticizer (4) per 100 parts by weight of the thermoplastic resin (4) (hereinafter, sometimes described as first content (4)) is the same as a preferred range of the first content (1) in the layer X.

In the second layer, the content of the first plasticizer (2) per 100 parts by weight of the thermoplastic resin (2) is defined as first content (2). In the third layer, the content of the first plasticizer (3) per 100 parts by weight of the thermoplastic resin (3) is defined as first content (3). Each of the first content (2) and the first content (3) is preferably 2 parts by weight or more, more preferably 4 parts by weight or more, still more preferably 8 parts by weight or more, further preferably 12 parts by weight or more, especially preferably 15 parts by weight or more, and most preferably 20 parts by weight or more. Each of the first content (2) and the first content (3) is preferably 36 parts by weight or less, more preferably 32 parts by weight or less, further preferably 28 parts by weight or less, especially preferably 26 parts by weight or less, and most preferably 24 parts by weight or less. When the first content (2) and the first content (3) are the above lower limit or more, the flexibility of the interlayer film is enhanced, and handling property of the interlayer film can be further enhanced. When the first content (2) and the first content (3) are the above upper limit or less, the penetration resistance of laminated glass is further enhanced, and color migration can be suppressed more effectively.

When the layer X is a surface layer of the interlayer film, a preferred range of the content of the first plasticizer (4) per 100 parts by weight of the thermoplastic resin (4) (hereinafter, sometimes described as first content (4)) is the same as a preferred range of the first content (2) and the first content (3) in the layer X.

For the purpose of enhancing the sound insulating property of the laminated glass, it is preferred that the first content (1) be larger than the first content (2) and it is preferred that the first content (1) be larger than the first content (3).

When the layer X is not a surface layer of the interlayer film, for the purpose of enhancing the sound insulating property of laminated glass, it is preferred that the first content (4) be larger than the first content (2) and it is preferred that the first content (4) be larger than the first content (3).

When the layer X is a surface layer of the interlayer film, for the purpose of enhancing the sound insulating property of laminated glass, it is preferred that the first content (1) be larger than the first content (4).

From the viewpoint of further enhancing the sound insulating property of the laminated glass, each of the absolute value of difference between the first content (2) and the first content (1) and the absolute value of difference between the first content (3) and the first content (1) is preferably 10 parts by weight or more, more preferably 15 parts by weight or more, and further preferably 20 parts by weight or more. Each of the absolute value of difference between the first content (2) and the first content (1) and the absolute value of difference between the first content (3) and the first content (1) is preferably 78 parts by weight or less, more preferably 75 parts by weight or less, further preferably 70 parts by weight or less.

When the layer X is not a surface layer of the interlayer film, from the viewpoint of further enhancing the sound insulating property of laminated glass, each of the absolute value of difference between the first content (2) and the first content (4) and the absolute value of difference between the first content (3) and the first content (4) is preferably 10 parts by weight or more, more preferably 15 parts by weight or more, and further preferably 20 parts by weight or more. Each of the absolute value of difference between the first content (2) and the first content (4) and the absolute value of difference between the first content (3) and the first content (4) is preferably 78 parts by weight or less, more preferably 75 parts by weight or less, further preferably 70 parts by weight or less.

When the layer X is a surface layer of the interlayer film, from the viewpoint of further enhancing the sound insulating property of laminated glass, the absolute value of difference between the first content (4) and the first content (1) is preferably 10 parts by weight or more, more preferably 15 parts by weight or more, further preferably 20 parts by weight or more. The absolute value of difference between the first content (4) and the first content (1) is preferably 78 parts by weight or less, more preferably 75 parts by weight or less, further preferably 70 parts by weight or less.

<Second plasticizer>

The interlayer film contains the second plasticizer (hereinafter, sometimes described as second plasticizer (0))

having a solubility parameter (SP value) of 18.0 $(J/cm^3)^{0.5}$ or more. The second plasticizer is a plasticizer having relatively large polarity. It is preferred that the first layer contain the second plasticizer (hereinafter, sometimes described as second plasticizer (1)). It is preferred that the second layer contain the second plasticizer (hereinafter, sometimes described as second plasticizer (2)). It is preferred that the third layer contain the second plasticizer (hereinafter, sometimes described as second plasticizer (3)). The layer X contains the second plasticizer (hereinafter, sometimes described as second plasticizer (4)). The second plasticizer (1), the second plasticizer (2), the second plasticizer (3), and the second plasticizer (4) may be the same or different from one another. One kind of the second plasticizer may be used alone and two or more kinds thereof may be used in combination.

Solubility parameter (SP value) of the second plasticizer is preferably 18.5 $(J/cm^3)^{0.5}$ or more, more preferably 20.0 $(J/cm^3)^{0.5}$ or more, and is preferably 30.0 $(J/cm^3)^{0.5}$ or less, more preferably 29.0 $(J/cm^3)^{0.5}$ or less. When the solubility parameter (SP value) of the second plasticizer is the above lower limit or more and the above upper limit or less, it is possible to exert the effect of the present invention more effectively.

An absolute value of difference between solubility parameter (SP value) of the second plasticizer, and solubility parameter of the first plasticizer is preferably 0.5 $(J/cm^3)^{0.5}$ or more, more preferably 1.5 $(J/cm^3)^{0.5}$ or more, further preferably 4.0 $(J/cm^3)^{0.5}$ or more, and is preferably 15.0 $(J/cm^3)^{0.5}$ or less, more preferably 12.0 $(J/cm^3)^{0.5}$ or less, further preferably 9.0 $(J/cm^3)^{0.5}$ or less. When the absolute value of difference is the above lower limit or more and the above upper limit or less, it is possible to exert the effect of the present invention more effectively.

Examples of the second plasticizer include trimethylolpropane, triethylene glycol, 3-(2-ethylhexyloxy)-1,2-propanediol, polycaprolactone triol represented by the following formula (P), 1,4 butanediol, diethylene glycol, dipropylene glycol, triethylene glycol monomethyl ether and triethylene glycol dimethyl ether. As the second plasticizer, a plasticizer other than the aforementioned plasticizers may be used.

[Chemical 3]

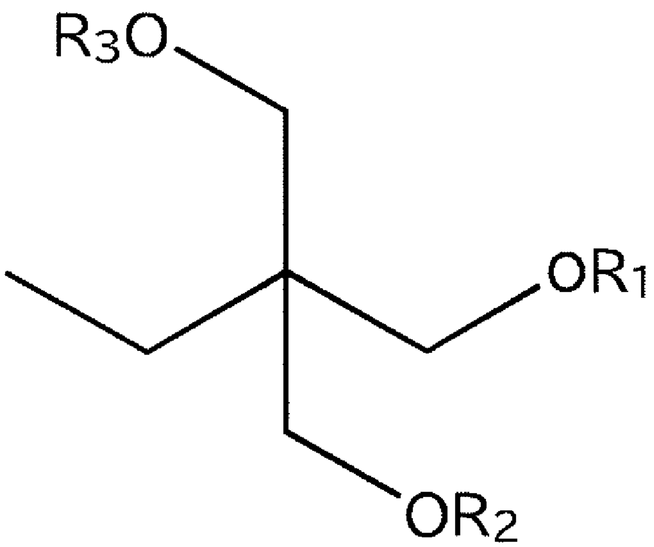

•••(P)

In the formula (P), $R_1$ to $R_3$ each represent a group represented by the following formula (P1). In the formula (P), $R_1$ to $R_3$ may be the same group, or may be different groups.

[Chemical 4]

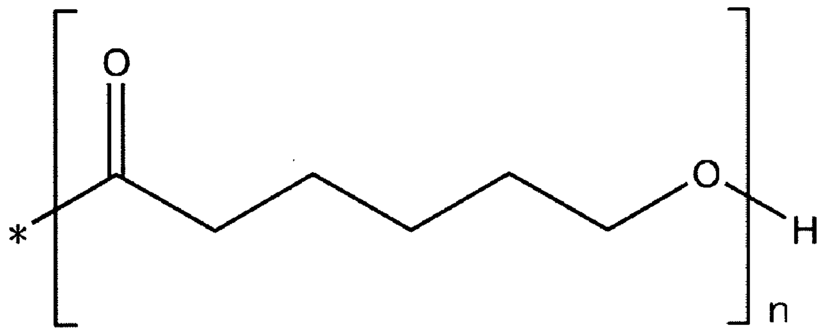

...(P1)

In the formula (P1), n represents a numeral of 1 or more and 5 or less, and * represents a bonding position with an oxygen atom.

In the formula (P1), n is preferably 2 or more, and is preferably 4 or less, more preferably 3 or less. When the n is the above lower limit or more and the above upper limit or less, it becomes easy to make solubility parameter (SP value) satisfy the above-described preferred range.

It is preferred that the second plasticizer be trimethylolpropane, triethylene glycol, 3-(2-ethylhexyloxy)-1,2-propanediol, or polycaprolactone triol represented by the above formula (P). In this case, the effect of the present invention can be exerted more effectively.

The content of the second plasticizer (0) per 100 parts by weight of the thermoplastic resin (0) in the interlayer film is defined as second content (0). The second content (0) is preferably 2 parts by weight or more, more preferably 8 parts by weight or more, further preferably 15 parts by weight or more, and is preferably 80 parts by weight or less, more preferably 50 parts by weight or less, further preferably 35 parts by weight or less. When the second content (0) is the above lower limit or more, the penetration resistance of laminated glass is further enhanced, and color migration can be suppressed more effectively. When the second content (0) is the above upper limit or less, the transparency of the interlayer film is further enhanced, and handling property of the interlayer film can be further enhanced.

In the first layer, the content of the second plasticizer (1) per 100 parts by weight of the thermoplastic resin (1) is defined as second content (1). The second content (1) is preferably 15 parts by weight or more, more preferably 20 parts by weight or more, further preferably 30 parts by weight or more, and is preferably 80 parts by weight or less, more preferably 70 parts by weight or less, further preferably 60 parts by weight or less, especially preferably 50 parts by weight or less. When the second content (1) is the above lower limit or more, the penetration resistance of laminated glass is further enhanced, and color migration can be suppressed more effectively. When the second content (1) is the above upper limit or less, the transparency of the interlayer film is further enhanced, and handling property of the interlayer film can be further enhanced.

When the layer X is not a surface layer of the interlayer film, a preferred range of the content of the second plasticizer (4) per 100 parts by weight of the thermoplastic resin (4) (hereinafter, sometimes described as second content (4)) is the same as a preferred range of the second content (1) in the layer X.

In the second layer, the content of the second plasticizer (2) per 100 parts by weight of the thermoplastic resin (2) is defined as second content (2). In the third layer, the content of the second plasticizer (3) per 100 parts by weight of the thermoplastic resin (3) is defined as second content (3). Each of the second content (2) and the second content (3) is preferably 2 parts by weight or more, more preferably 4 parts by weight or more, still more preferably 8 parts by weight or more, further preferably 12 parts by weight or more, especially preferably 15 parts by weight or more, and most preferably 20 parts by weight or more. Each of the second content (2) and the second content (3) is preferably 36 parts by weight or less, more preferably 32 parts by weight or less, further preferably 28 parts by weight or less, especially preferably 26 parts by weight or less, and most preferably 24 parts by weight or less. When the second content (2) and the second content (3) are the above lower limit or more, it is possible to suppress color migration more effectively. When the second content (2) and the second content (3) are the above upper limit or less, the penetration resistance of laminated glass is further enhanced, and flexibility of the interlayer film is enhanced, and handling property of the interlayer film can be further enhanced.

When the layer X is a surface layer of the interlayer film, a preferred range of the content of the second plasticizer (4) per 100 parts by weight of the thermoplastic resin (4) (hereinafter, sometimes described as second content (4)) is the same as a preferred range of the second content (2) and the second content (3) in the layer X.

For the purpose of enhancing the sound insulating property of the laminated glass, it is preferred that the second content (1) be larger than the second content (2) and it is preferred that the second content (1) be larger than the second

content (3).

When the layer X is not a surface layer of the interlayer film, for the purpose of enhancing the sound insulating property of laminated glass, it is preferred that the second content (4) be larger than the second content (2) and it is preferred that the second content (4) be larger than the second content (3).

When the layer X is a surface layer of the interlayer film, for the purpose of enhancing the sound insulating property of laminated glass, it is preferred that the second content (1) be larger than the second content (4).

From the viewpoint of further enhancing the sound insulating property of the laminated glass, each of the absolute value of difference between the second content (2) and the second content (1) and the absolute value of difference between the second content (3) and the second content (1) is preferably 10 parts by weight or more, more preferably 15 parts by weight or more, and further preferably 20 parts by weight or more. Each of the absolute value of difference between the second content (2) and the second content (1) and the absolute value of difference between the second content (3) and the second content (1) is preferably 78 parts by weight or less, more preferably 75 parts by weight or less, further preferably 70 parts by weight or less.

When the layer X is not a surface layer of the interlayer film, from the viewpoint of further enhancing the sound insulating property of laminated glass, each of the absolute value of difference between the second content (2) and the second content (4) and the absolute value of difference between the second content (3) and the second content (4) is preferably 10 parts by weight or more, more preferably 15 parts by weight or more, and further preferably 20 parts by weight or more. Each of the absolute value of difference between the second content (2) and the second content (4) and the absolute value of difference between the second content (3) and the second content (4) is preferably 78 parts by weight or less, more preferably 75 parts by weight or less, further preferably 70 parts by weight or less.

When the layer X is a surface layer of the interlayer film, from the viewpoint of further enhancing the sound insulating property of laminated glass, the absolute value of difference between the second content (4) and the second content (1) is preferably 10 parts by weight or more, more preferably 15 parts by weight or more, further preferably 20 parts by weight or more. The absolute value of difference between the second content (4) and the second content (1) is preferably 78 parts by weight or less, more preferably 75 parts by weight or less, further preferably 70 parts by weight or less.

In 100% by weight of the plasticizer contained in the interlayer film, the content of the second plasticizer is preferably 20% by weight or more, more preferably 25% by weight or more, further preferably 40% by weight or more, and is preferably 80% by weight or less, more preferably 75% by weight or less, further preferably 60% by weight or less. When the content of the second plasticizer is the above lower limit or more and the above upper limit or less, it is possible to exert the effect of the present invention more effectively.

In 100% by weight of the plasticizer contained in the layer X, the content of the second plasticizer is preferably 20% by weight or more, more preferably 25% by weight or more, further preferably 40% by weight or more, and is preferably 80% by weight or less, more preferably 75% by weight or less, further preferably 60% by weight or less. When the content of the second plasticizer is the above lower limit or more and the above upper limit or less, it is possible to exert the effect of the present invention more effectively.

(Coloring agent)

The interlayer film may contain or need not contain a coloring agent. The first layer may contain or need not contain a coloring agent. The second layer may contain or need not contain a coloring agent. The third layer may contain or need not contain a coloring agent. The layer X may contain or need not contain a coloring agent. By using the coloring agent, it is possible to favorably color the interlayer film to desired color tone. One kind of the coloring agent may be used alone and two or more kinds thereof may be used in combination.

Examples of the coloring agent include a pigment, a dye and the like. The coloring agent may be a pigment, may be a dye, and may be both of a pigment and a dye. There also exists a coloring agent that is classified both as a pigment and as a dye.

In a conventional interlayer film including a layer containing a coloring agent and a layer not containing a coloring agent, color migration is particularly likely to occur. Also, when the coloring agent is a dye, color migration is particularly likely to occur. In contrast, in the interlayer film according to the present invention, even when the interlayer film includes a layer containing a coloring agent and a layer not containing a coloring agent, and even when the coloring agent is a dye, color migration can be suppressed.

In 100% by weight of the layer containing a color agent (the first layer, the second layer, the third layer or the layer X), the content of the coloring agent is preferably 0.01% by weight or more, more preferably 0.1% by weight or more, further preferably 0.2% by weight or more, and is preferably 1.5% by weight or less, more preferably 1.0% by weight or less. When the content of the coloring agent is the above lower limit or more and the above upper limit or less, it is possible to favorably color the interlayer film into a desired color tone, and it is possible to exert the effect of the present invention more effectively.

In 100% by weight of the interlayer film, the content of the coloring agent is preferably 0.01% by weight or more, more preferably 0.1% by weight or more, further preferably 0.2% by weight or more, and is preferably 1.5% by weight or less, more preferably 1.0% by weight or less. When the content of the coloring agent is the above lower limit or more and the above upper limit or less, it is possible to favorably color the interlayer film into a desired color tone, and it is possible to exert the effect of the present invention more effectively.

<Pigment>

The coloring agent may contain a pigment or may be a pigment. The interlayer film may contain or need not contain a pigment. The first layer may contain or need not contain a pigment. The second layer may contain or need not contain a pigment. The third layer may contain or need not contain a pigment. The layer X may contain or need not contain a pigment. By using the pigment, it is possible to favorably color the interlayer film to desired color tone. One kind of the pigment may be used alone, and two or more kinds thereof may be used in combination.

The pigment may be an organic pigment and may be an inorganic pigment. The organic pigment may be an organic pigment having a metal atom, and may be an organic pigment not having a metal atom. One kind of the pigment may be used alone, and two or more kinds thereof may be used in combination.

Examples of the organic pigment include a phthalocyanine compound, a quinacridone compound, an azo compound, a pentaphene compound, a perylene compound, an indole compound, a threne compound, a diketopyrrolopyrrole compound, an anthraquinone compound, a perinone compound, an indanthrene compound, an indigo compound, an isoindolinone compound, a nickel complex compound, a methine compound, an azomethine compound, and a dioxazine compound.

In 100% by weight of the layer containing a pigment (the first layer, the second layer, the third layer or the layer X), the content of the pigment is preferably 0.01% by weight or more, more preferably 0.1% by weight or more, further preferably 0.2% by weight or more, and is preferably 1.5% by weight or less, more preferably 1% by weight or less. When the content of the pigment is the above lower limit or more and the above upper limit or less, it is possible to favorably color the interlayer film into a desired color tone, and it is possible to exert the effect of the present invention more effectively.

In 100% by weight of the interlayer film, the content of the pigment is preferably 0.01% by weight or more, more preferably 0.1% by weight or more, further preferably 0.2% by weight or more, and is preferably 1.5% by weight or less, more preferably 1.0% by weight or less. When the content of the pigment is the above lower limit or more and the above upper limit or less, it is possible to favorably color the interlayer film into a desired color tone, and it is possible to exert the effect of the present invention more effectively.

<Dye>

The coloring agent may contain a dye or may be a dye. The interlayer film may contain or need not contain a dye. The first layer may contain or need not contain a dye. The second layer may contain or need not contain a dye. The third layer may contain or need not contain a dye. The layer X may contain or need not contain a dye. By using the dye, it is possible to favorably color the interlayer film to desired color tone. One kind of the dye may be used alone, and two or more kinds thereof may be used in combination.

Examples of the dye include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, and dioxazine.

The molecular weight of the dye may be 100 or more, may be 200 or more, may be 300 or more, and may be 1000 or less, may be 800 or less, and may be 500 or less. In a conventional interlayer film containing a dye having a small molecular weight (for example, dye having a molecular weight of 500 or less), color migration is particularly likely to occur. In contrast, in the interlayer film according to the present invention, even when the interlayer film contains a dye having a small molecular weight, it is possible to suppress color migration.

In 100% by weight of the layer containing a dye (the first layer, the second layer, the third layer or the layer X), the content of the dye is preferably 0.01% by weight or more, more preferably 0.1% by weight or more, and is preferably 1.5% by weight or less, more preferably 1% by weight or less. When the content of the dye is the above lower limit or more and the above upper limit or less, it is possible to favorably color the interlayer film into a desired color tone, and it is possible to exert the effect of the present invention more effectively.

In 100% by weight of the interlayer film, the content of the dye is preferably 0.01% by weight or more, more preferably 0.1% by weight or more and is preferably 1.5% by weight or less, more preferably 1% by weight or less. When the content of the dye is the above lower limit or more and the above upper limit or less, it is possible to favorably color the interlayer film into a desired color tone, and it is possible to exert the effect of the present invention more effectively.

(Heat shielding substance)

It is preferred that the interlayer film contain a heat shielding substance. It is preferred that the first layer contain a heat shielding substance. It is preferred that the second layer contain a heat shielding substance. It is preferred that the third layer contain a heat shielding substance. It is preferred that the layer X contain a heat shielding substance. One kind of the heat shielding substance may be used alone, and two or more kinds thereof may be used in combination.
It is preferred that the heat shielding substance contain at least one kind of Ingredient X among a phthalocyanine compound, a naphthalocyanine compound, and an anthracyanine compound or contain heat shielding particles. In this case, the heat shielding substance may contain both of the Ingredient X and the heat shielding particles.

Ingredient X:

It is preferred that the interlayer film contain at least one kind of Ingredient X among a phthalocyanine compound, a naphthalocyanine compound, and an anthracyanine compound. It is preferred that the first layer contain the Ingredient X. It is preferred that the second layer contain the Ingredient X. It is preferred that the third layer contain the Ingredient X. It is preferred that the layer X contain the Ingredient X. The Ingredient X is a heat shielding substance. One kind of the Ingredient X may be used alone and two or more kinds thereof may be used in combination.
The Ingredient X is not particularly limited. As the Ingredient X, conventionally known phthalocyanine compound, naphthalocyanine compound and anthracyanine compound can be used.
Examples of the Ingredient X include phthalocyanine, a derivative of phthalocyanine, naphthalocyanine, a derivative of naphthalocyanine, anthracyanine, and a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.
With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.
From the viewpoints of effectively enhancing the heat shielding property and maintaining the visible light transmittance at a higher level over a long period of time, it is preferred that the Ingredient X contain vanadium atom(s) or copper atom(s). It is preferred that the Ingredient X contain vanadium atom(s) and it is also preferred that the Ingredient X contain copper atom(s). It is more preferred that the Ingredient X be at least one kind among phthalocyanine containing vanadium atom(s) or copper atom(s) and a derivative of phthalocyanine containing vanadium atom(s) or copper atom(s). From the viewpoint of still further enhancing the heat shielding property of the interlayer film and the laminated glass, it is preferred that the Ingredient X have a structural unit in which an oxygen atom is bonded to a vanadium atom.
In 100% by weight of the interlayer film or in 100% by weight of a layer containing the Ingredient X (a first layer, a second layer, a third layer, or a layer X), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, a third layer, or a layer X), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding property is sufficiently enhanced and the visible light transmittance is sufficiently enhanced. For example, it is possible to make the visible light transmittance 70% or more.

Heat shielding particles:

It is preferred that the interlayer film contain heat shielding particles. It is preferred that the first layer contain the heat shielding particles. It is preferred that the second layer contain the heat shielding particles. It is preferred that the third layer contain the heat shielding particles. It is preferred that the layer X contain the heat shielding particles. The heat shielding particles are a heat shielding substance. By the use of heat shielding particles, infrared rays (heat rays) can be effectively cut off. One kind of the heat shielding particles may be used alone, and two or more kinds thereof may be used in combination.
From the viewpoint of further enhancing the heat shielding properties of laminated glass, it is more preferred that the heat shielding particles be metal oxide particles. It is preferred that the heat shielding particles be particles of a metal oxide (metal oxide particles).
The energy amount of an infrared ray with a wavelength of 780 nm or longer which is longer than that of visible

light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride ($LaB_6$) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the interlayer film and the laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding property of the interlayer film and the laminated glass, cesium-doped tungsten oxide particles are especially preferred. From the viewpoint of still further enhancing the heat shielding property of the interlayer film and the laminated glass, it is preferred that the cesium-doped tungsten oxide particles be tungsten oxide particles represented by the formula: $Cs_{0.33}WO_3$.

The average particle diameter of the heat shielding particles is preferably 0.01 um or more, more preferably 0.02 um or more, and is preferably 0.1 um or less, more preferably 0.05 um or less. When the average particle diameter is the above lower limit or more, the heat ray shielding property is sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, a third layer, or a layer X), the content of the heat shielding particles (in particular, the content of tungsten oxide particles) is preferably 0.01% by weight or more, more preferably 0.1% by weight or more, further preferably 1% by weight or more, especially preferably 1.5% by weight or more. In 100% by weight of the interlayer film or in 100% by weight of a layer containing the heat shielding particles (a first layer, a second layer, a third layer, or a layer X), the content of the heat shielding particles (in particular, the content of tungsten oxide particles) is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

(Metal salt)

It is preferred that the interlayer film contain at least one kind of metal salt (hereinafter, sometimes described as Metal salt M) of alkali metal salts and alkali earth metal salts. It is preferred that the first layer contain the Metal salt M. It is preferred that the second layer contain the Metal salt M. It is preferred that the third layer contain the Metal salt M. It is preferred that the layer X contain the Metal salt M. The alkali earth metal means six metals of Be, Mg, Ca, Sr, Ba, and Ra. Use of the Metal salt M facilitates controlling of the adhesivity between the interlayer film and a lamination glass member such as a glass plate or the adhesivity between layers in the interlayer film. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt M contained in the interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate having 2 to 16 carbon atoms and the potassium carboxylate having

2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in an interlayer film containing the Metal salt M or a layer containing the Metal salt M (a first layer, a second layer, a third layer, or a layer X) is preferably 5 ppm or more, more preferably 10 ppm or more, further preferably 20 ppm or more, and is preferably 300 ppm or less, more preferably 250 ppm or less, further preferably 200 ppm or less. When the total of the contents of Mg and K is the above lower limit or more and the above upper limit or less, the adhesivity between the interlayer film and a lamination glass member (e.g., glass plate) or the adhesivity between layers in the interlayer film can be further well controlled.

(Ultraviolet ray screening agent)

It is preferred that the interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. It is preferred that the layer X contain an ultraviolet ray screening agent. By the use of an ultraviolet ray screening agent, the visible light transmittance becomes still less likely to decrease even when the interlayer film and the laminated glass are used for a long period. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-diamylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the interlayer film or in 100% by weight of a layer containing the ultraviolet ray screening agent (a first layer, a second layer, a third layer, or a layer X), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In this case, the visible light transmittance becomes still less likely to decrease even when the interlayer film and the laminated glass are used for a long period. In 100% by weight of the interlayer film or in 100% by weight of a layer containing the ultraviolet ray screening agent (a first layer, a second layer, a third layer, or a layer X), the content of the ultraviolet ray screening agent and the content of the benzotriazole compound are preferably 2.5% by weight or less, more preferably 2% by weight or less, further preferably 1% by weight or less, especially preferably 0.8% by weight or less. Especially, by setting the content of the ultraviolet ray screening agent to be 0.2% by weight or more in 100% by weight of a layer containing the ultraviolet ray screening agent, the visible light transmittance becomes still less likely to decrease even when the interlayer film and the laminated glass are used for a long period.

(Oxidation inhibitor)

It is preferred that the interlayer film contain an oxidation inhibitor. It is preferred that the first layer contain an oxidation inhibitor. It is preferred that the second layer contain an oxidation inhibitor. It is preferred that the third layer contain an oxidation inhibitor. It is preferred that the layer X contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylene bis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy) (2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H - BHT" available from Sakai Chemical Industry Co., Ltd., "IRGANOX 1010" available from BASF Japan Ltd., and the like.

With regard to the interlayer film and laminated glass, in order to maintain high visible light transmittance thereof over a long period of time, the content of the oxidation inhibitor is preferably 0.03% by weight or more, more preferably 0.1% by weight or more in 100% by weight of the interlayer film or in 100% by weight of a layer containing the oxidation inhibitor (a first layer, a second layer, a third layer, or a layer X) . Moreover, since an effect commensurate with the addition of an oxidation inhibitor is saturated, it is preferred that the content of the oxidation inhibitor be 2% by weight or less in 100% by weight of the interlayer film or in 100% by weight of a layer containing the oxidation inhibitor.

(Other ingredients)

Each of the interlayer film, the first layer, the second layer, the third layer and the layer X may contain other ingredients than the above-described ingredients as necessary. Examples of other ingredients include a coupling agent, a dispersing agent, a surfactant, a fire retardant, an antistatic agent, an adhesion adjusting agent other than metal salt, a moisture-proofing agent, a fluorescent brightener, and an infrared absorber, and the like. One kind of these other ingredients may be used alone, and two or more kinds thereof may be used in combination.

(Other details of interlayer film for laminated glass)

The interlayer film has one end and the other end being on an opposite side of the one end. The one end and the other end are both end parts facing each other in the interlayer film.

The interlayer film may be an interlayer film in which the thickness of the one end and the thickness of the other end are the same, or may be an interlayer film in which the thickness of the other end is larger than the thickness of the one end. The interlayer film may be an interlayer film having a uniform thickness, or may be an interlayer film having varying thickness. The sectional shape of the interlayer film may be a rectangular shape or may be a wedge-like shape.

The maximum thickness of the interlayer film is preferably 0.1 mm or more, more preferably 0.25 mm or more, further preferably 0.5 mm or more, especially preferably 0.8 mm or more, and is preferably 3.8 mm or less, more preferably 2.0 mm or less, further preferably 1.5 mm or less.

From the viewpoint of the practical aspect and the viewpoint of sufficiently enhancing the adhesive strength and the penetration resistance, the maximum thickness of a surface layer of the interlayer film is preferably 0.001 mm or more, more preferably 0.2 mm or more, further preferably 0.3 mm or more, and is preferably 1.0 mm or less, more preferably 0.8 mm or less.

From the viewpoint of the practical aspect and the viewpoint of sufficiently enhancing the penetration resistance, the maximum thickness of a layer (intermediate layer) arranged between two surface layers is preferably 0.001 mm or more, more preferably 0.1 mm or more, further preferably 0.2 mm or more and is preferably 0.8 mm or less, more preferably 0.6 mm or less, further preferably 0.3 mm or less.

The distance between one end and the other end of the interlayer film is preferably 3.0 m or less, more preferably 2.0 m or less, especially preferably 1.5 m or less, and is preferably 0.5 m or more, more preferably 0.8 m or more, especially preferably 1.0 m or more.

The interlayer film may have a shading region. The shading region may be separate from the region for display. The shading region is provided so as to prevent a driver from feeling glare while driving, for example, by sunlight or outdoor lighting. The shading region can be provided so as to impart the heat blocking property. It is preferred that the shading region be located in an edge portion of the interlayer film. It is preferred that the shading region be belt-shaped.

In the shading region, a coloring agent or a filler may be used so as to change the color and the visible light transmittance. The coloring agent or the filler may be contained in a partial region in the thickness direction of the interlayer film and may be contained in the entire region in the thickness direction of the interlayer film.

From the viewpoint of providing better display, and further broadening the field of view, the visible light transmittance of the region for display is preferably 80% or more, more preferably 88% or more, further preferably 90% or more. It is preferred that the visible light transmittance of the region for display be higher than the visible light transmittance of the shading region. The visible light transmittance of the region for display may be lower than the visible light transmittance of the shading region. The visible light transmittance of the region for display is higher than the visible light transmittance of the shading region preferably by 50% or more, more preferably by 60% or more.

When the visible light transmittance varies in the interlayer film of each of the region for display and the shading region, the visible light transmittance is measured at the center position of the region for display and at the center position of the shading region.

The visible light transmittance at a wavelength ranging from 380 nm to 780 nm of the obtained laminated glass can be measured by using a spectrophotometer (for example, "U-4100" available from Hitachi High-Tech Corporation) in accordance with JIS R3211:1998. As the glass plate, it is preferred to use clear glass having a thickness of 2 mm.

The interlayer film may be wound to be formed into a roll body of the interlayer film. The roll body may include a winding core and an interlayer film wound on the outer periphery of the winding core.

The method for producing the interlayer film is not particularly limited. In the case of a single-layered interlayer film, examples of the production method of the interlayer film include a method of extruding a resin composition with an extruder. One exemplary method for forming the interlayer film in the case of a multi-layered interlayer film includes separately forming layers by using resin compositions for forming respective layers, and then layering the obtained layers. Further, as a method for producing the interlayer film, a method of layering layers by co-extruding resin compositions for forming respective layers using an extruder can be recited. A production method of extrusion-molding is preferred because the method is suitable for continuous production.

For the reason of excellent production efficiency of the interlayer film, it is preferred that the second layer and the third layer contain the same polyvinyl acetal resin. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.
It is preferred that the interlayer film have protrusions and recesses on at least one surface of the surfaces of both sides. It is more preferred that the interlayer film have protrusions and recesses on surfaces of both sides. Examples of the method for forming the protrusions and recesses include, but are not particularly limited to, a lip emboss method (melt fracture method), an emboss roll method, a calender roll method, and a profile extrusion method, and the like.

(Laminated glass)

A laminated glass according to the present invention includes a first lamination glass member, a second lamination glass member and the interlayer film described above. In the laminated glass according to the present invention, the interlayer film is arranged between the first lamination glass member and the second lamination glass member.
Fig. 4 is a sectional view schematically showing an example of laminated glass prepared with the interlayer film for laminated glass shown in Fig. 1.
A laminated glass 31 shown in Fig. 4 includes a first lamination glass member 21, a second lamination glass member 22 and the interlayer film 11. The interlayer film 11 is arranged between the first lamination glass member 21 and the second lamination glass member 22 to be sandwiched therebetween.
The first lamination glass member 21 is layered on a first surface of the interlayer film 11. The second lamination glass member 22 is layered on a second surface opposite to the first surface of the interlayer film 11. The first lamination glass member 21 is layered on an outer surface of the second layer 2. The second lamination glass member 22 is layered on an outer surface of the third layer 3.
Fig. 5 is a sectional view schematically showing an example of laminated glass prepared with the interlayer film for laminated glass shown in Fig. 2.
A laminated glass 31A shown in Fig. 5 includes the first lamination glass member 21, the second lamination glass member 22 and the interlayer film 11A. The interlayer film 11A is arranged between the first lamination glass member 21 and the second lamination glass member 22 to be sandwiched therebetween.
The first lamination glass member 21 is layered on a first surface of the interlayer film 11A. The second lamination glass member 22 is layered on a second surface opposite to the first surface of the interlayer film 11.
The laminated glass may be a head-up display. When the laminated glass is a head-up display, the laminated glass has a display region of the head-up display. The display region is a region capable of favorably displaying information. For example, by using the interlayer film 11B shown in Fig. 3, the first lamination glass member, and the second lamination glass member, a laminated glass which is a head-up display can be obtained.
A head-up display system can be obtained by using the aforementioned head-up display. The head-up display system includes the laminated glass, and a light source device for irradiating the laminated glass with light for image display. The light source device can be attached, for example, to a dashboard in a vehicle. By irradiating the display region of the laminated glass with light from the light source device, it is possible to achieve image display.
It is preferred that the first lamination glass member be the first glass plate. It is preferred that the second lamination glass member be the second glass plate.
Examples of the first and second lamination glass members include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate including a glass plate, and it is preferred that at least one glass plate be used. It is preferred that each of the first lamination glass member and the second lamination glass member be a glass plate or a PET film, and the laminated glass include a glass plate as at least one of the first lamination glass member and the second lamination glass member. It is especially preferred that both of the first and second lamination glass members be glass plates.
Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, green glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.
The thickness of each of the first lamination glass member and the second lamination glass member is preferably 1 mm or more, and is preferably 5 mm or less, more preferably 3 mm or less. Moreover, when the lamination glass member is a glass plate, the thickness of the glass plate is preferably 0.5 mm or more, more preferably 0.7 mm or more, and is preferably 5 mm or less, more preferably 3 mm or less. When the lamination glass member is a PET film, the

thickness of the PET film is preferably 0.03 mm or more and is preferably 0.5 mm or less.

The method for producing the laminated glass is not particularly limited. First, the interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Each of the interlayer film and the laminated glass can be used for automobiles, railway vehicles, aircraft, ships, and buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass, roof glass or glass for backlight of an automobile, and the like. The interlayer film and the laminated glass are suitably used for automobiles. The interlayer film is suitably used for obtaining laminated glass for an automobile.

Hereinafter, the present invention will be described in more detail with reference to examples and comparative examples. The present invention is not limited only to these examples.

In polyvinyl acetal resins used, n-butyraldehyde which has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

The following materials were prepared.

(Thermoplastic resin)

Polyvinyl acetal resin (polyvinyl butyral resin, average polymerization degree of 1700, content of hydroxyl group of 30% by mole, acetylation degree of 1% by mole, acetalization degree (butyralization degree) of 69% by mole))

(First plasticizer)

Triethylene glycol di-2-ethylhexanoate (3GO)

(Second plasticizer)

Trimethylolpropane (TMP)
Polycaprolactone triol represented by the above formula (P) ("OD-X2586", available from DIC Corporation, in the above formula (P1), n is a numeral of 1 or more and 3 or less)

Solubility parameters (SP values) of thermoplastic resin and each plasticizer are shown in Table. These solubility parameters (SP values) are values calculated by the method described above.

(Coloring agent)

Solvent Blue 36 (dye)
Disperse Violet 28 (dye)
Solvent Yellow 163 (dye)

(Ultraviolet absorber)

Tinuvin 326 (2-(2'-hydroxy-3'-t-butyl-5-methylphenyl)-5-chlorobenzotriazole, "Tinuvin 326" available from BASF Japan Ltd.)

(Oxidation inhibitor)

BHT (2,6-di-t-butyl-p-cresol)

(Example 1)

Preparation of composition for forming first layer (colored layer):

The following ingredients were mixed, and kneaded sufficiently with a mixing roll to obtain a composition for forming the first layer (colored layer).

Polyvinyl butyral resin (PVB): 100 parts by weight
Triethylene glycol di-2-ethylhexanoate (3GO): 30 parts by weight
Polycaprolactone triol ("OD-X2586" available from DIC Corporation): 10 parts by weight
Solvent Blue 36: Amount that is to be 0.29% by weight in 100% by weight of obtained first layer
Disperse Violet 28: Amount that is to be 0.27% by weight in 100% by weight of obtained first layer
Solvent Yellow 163: Amount that is to be 0.43% by weight in 100% by weight of obtained first layer
Tinuvin326: Amount that is to be 0.2% by weight in 100% by weight of obtained first layer
BHT: Amount that is to be 0.2% by weight in 100% by weight of obtained first layer

Preparation of composition for forming second layer and third layer (non-colored layer):

The following ingredients were mixed, and kneaded sufficiently with a mixing roll to obtain a composition for forming the second layer and the third layer (non-colored layer).

Polyvinyl butyral resin (PVB): 100 parts by weight
Triethylene glycol di-2-ethylhexanoate (3GO): 30 parts by weight
Polycaprolactone triol ("OD-X2586" available from DIC Corporation): 10 parts by weight
Tinuvin326: Amount that is to be 0.2% by weight in 100% by weight of obtained second and third layers
BHT: Amount that is to be 0.2% by weight in 100% by weight of obtained second and third layers

Preparation of interlayer film:

By coextruding a composition for forming a first layer and a composition for forming second and third layers using a coextruder, an interlayer film (thickness: 800 pm) having a three-layer structure (second layer (thickness: 350 pm)/first layer (thickness: 100 pm)/third layer (thickness: 350 pm)) was prepared. Each of the first, second, third layers corresponds to the above-described layer X.

Preparation of laminated glass:

The obtained interlayer film was sandwiched between two sheets of 2-mm thick clear glass (300 mm long x 300 mm wide) conforming to JIS R3202:1996 to obtain a laminate. The obtained laminate was put into a rubber bag and the inside thereof is degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a laminated glass.

(Examples 2 to 5 and Comparative Examples 1 to 5)

An interlayer film (thickness: 800 um) having a three-layered structure (second layer (thickness: 350 μm)/first layer (thickness: 100 um)/third layer (thickness: 350 um)) was prepared in the same manner as that in Example 1 except that the kind and the content of the plasticizer were changed to those shown in Tables 1, 2. Regarding the ultraviolet absorber, the oxidation inhibitor and the coloring agent, the same kinds and the same blending amounts as those in Example 1 were used. Also, using the obtained interlayer film, laminated glass was prepared in the same manner as in Example 1.

(Evaluation)

(1) Visible light transmittance of each layer of interlayer film

By measuring visible light transmittance at a wavelength ranging from 380 nm to 780 nm of the obtained laminated glass using a spectrophotometer ("U-4100" available from Hitachi High-tech Corporation), visible light transmittance of each layer of the interlayer film was measured.

(2) Color migration

In each of Examples and Comparative Examples, a composition having the same composition as the composition for forming the first layer (colored layer) except for the concentration of the coloring agent was sufficiently kneaded with a mixing roll to form a colored layer for color migration test (thickness: 760 pm). Concentration of the coloring agent was appropriately adjusted so that visible light transmittance of the first layer (thickness: 100 um) measured in the above (1), and visible light transmittance of the obtained colored layer for color migration test (thickness: 760 um) were the same value. Specifically, Solvent Blue 36 was used in an amount that is to be 0.04% by weight, Disperse Violet 28 was used in an amount that is to be 0.03% by weight, and Solvent Yellow 163 was used in an amount that is to be 0.05% by weight in 100% by weight of the obtained colored layer for color migration test. In each of Examples and Comparative Examples, a composition having the same composition as the composition for forming the second and third layers (non-colored layer) was sufficiently kneaded with a mixing roll to form a non-colored layer for color migration test (thickness: 760 um). Visible light transmittance of the non-colored layer for color migration test (thickness: 760 μm) is shown in Table.

Two non-colored layers for color migration test were prepared, and one of these was subjected to the following test. Two non-colored layers for color migration test are respectively called non-colored layers for color migration test (1), (2).

On a rubber sheet (hardness: 60, length: 5 cm, width: 5 cm, thickness: 3 mm, "B-1001" available from IRUMAGAWA RUBBER Co., Ltd.), a colored layer for color migration test (length: 4 cm, width: 4 cm, thickness: 760 um) was placed. Next, on the colored layer for color migration test, non-colored layer for color migration test (1) (length: 4 cm, width: 4 cm, thickness: 760 um) was placed.

Next, on the non-colored layer for color migration test (1), clear glass (length: 3 cm, width: 3 cm, thickness: 2.5 mm) was placed. Next, on the clear glass, laminated glass for weight (length: 15 cm, width: 15 cm, thickness: 5.8 mm) was placed, and further a weight was placed on the laminated glass for weight. The total weight of the laminated glass for weight and the weight is 1800 g. In this state, the resultant sample was left to stand at 23°C and a humidity of 25% for a week. After standing, the non-colored layer for color migration test (1) was taken out.

Using the non-colored layer for color migration test (1) after standing, and two sheets of clear glass (thickness: 2.5 mm, length: 4 cm, width: 4 cm) having a visible light transmittance measured in accordance with JIS R3106:1998 of 90%, a laminated glass was prepared. Also, using the non-colored layer for color migration test (2) not having subjected to a test, and two sheets of clear glass (thickness: 2.5 mm, length: 4 cm, width: 4 cm) having a visible light transmittance measured in accordance with JIS R3106:1998 of 90%, a laminated glass was prepared. For these laminated glasses, change in color tone (color difference ΔE) before and after standing was determined in accordance with JIS Z 8781-4:2013 using a spectrophotometer ("U-4100" available from Hitachi High-Technologies Corporation). More specifically, by measuring transmittance at a wavelength ranging from 380 nm to 780 nm of laminated glass, and measuring color coordinate a*, color coordinate b* and color coordinate L* using a CIE standard illuminant D65 defined by JIS Z8781, and a 10° color matching function, color difference ΔE was determined. The measurement position was a center part of the laminated glass. The color migration was judged according to the following criteria.

[Criterial for judgment in color migration]

∞: ΔE is 6 or less
◦; ΔE is more than 6 and 8 or less
×: ΔE is more than 8

(3) Glass transition temperature of each layer of interlayer film (Tg)

An object (layer) to be measured obtained by peeling each layer off from the interlayer film, and press-molding each isolated layer by a press molder was measured by using "ARES-G2" available from TA Instruments. A parallel plate with a diameter of 8 mm was used as a jig, and the measurement was performed under the conditions in which

the temperature was decreased from 100°C to -10°C at a temperature decreasing rate of 3°C/minute, a frequency was 1 Hz and a strain was 1%. In the measurement results obtained, the peak temperature of the loss tangent was defined as the glass transition temperature Tg (°C).

[Criteria for evaluating glass transition temperature of each layer of interlayer film]

◦: Glass transition temperature of 29°C or less
×: Glass transition temperature of more than 29°C

Configurations of interlayer films and results are shown in the following Tables 1, 2.

[Table 1]

| | | | | Example 1 | Example 2 | Example 3 | Example 4 | Example 5 |
|---|---|---|---|---|---|---|---|---|
| First layer (colored layer) | Thermoplastic resin | Kind | - | PVB | PVB | PVB | PVB | PVB |
| | | Solubility parameter (SP value) | $(J/cm^3)^{0.5}$ | 27.6 | 27.6 | 27 . 6 | 27 . 6 | 27.6 |
| | | Content | parts by weight | 100 | 100 | 100 | 100 | 100 |
| | First plasticizer | Kind | - | 3GO | 3GO | 3GO | 3GO | 3GO |
| | | Solubility parameter (SP value) | $(J/cm^3)^{0.5}$ | 16.9 | 16.9 | 16.9 | 16.9 | 16.9 |
| | | Content | parts by weight | 30 | 20 | 10 | 30 | 40 |
| | Second plasticizer | Kind | - | OD-X2586 | OD-X2586 | OD-X2586 | TMP | - |
| | | Solubility parameter (SP value) | $(J/cm^3)^{0.5}$ | 18.9 | 18.9 | 18.9 | 28.8 | - |
| | | Content | parts by weight | 10 | 20 | 30 | 10 | - |
| | Absolute value of difference between SP value of first plasticizer and SP value of second plasticizer in first layer | | $(J/cm^3)^{0.5}$ | 2.0 | 2.0 | 2.0 | 11.9 | - |
| | Absolute value of difference between SP value of thermoplastic resin and SP value of second olasticizer in first layer | | $(J/cm^3)^{0.5}$ | 8.7 | 8.7 | 8.7 | 1.2 | - |
| | Content of second plasticizer in 100% by weight of plasticizer in first layer | | % by weight | 25 | 50 | 75 | 25 | 0 |
| | Visible light transmittance | | % | 4.92 | 4.42 | 4.22 | 4.50 | 5.09 |

(continued)

| | | | | Example 1 | Example 2 | Example 3 | Example 4 | Example 5 |
|---|---|---|---|---|---|---|---|---|
| Second layer Third layer (non-colored layer) | Thermoplastic resin | Kind | - | PVB | PVB | PVB | PVB | PVB |
| | | Solubility parameter (SP value) | $(J/cm^3)^{0.5}$ | 27.6 | 27.6 | 27.6 | 27.6 | 27.6 |
| | | Content | parts by weight | 100 | 100 | 100 | 100 | 100 |
| | First plasticizer | Kind | - | 3GO | 3GO | 3GO | 3GO | 3GO |
| | | Solubility parameter (SP value) | $(J/cm^3)^{0.5}$ | 16.9 | 16.9 | 16.9 | 16.9 | 16.9 |
| | | Content | parts by weight | 30 | 20 | 10 | 30 | 10 |
| | Second plasticizer | Kind | - | OD-X2586 | OD-X2586 | OD-X2586 | TMP | OD-X2586 |
| | | Solubility parameter (SP value) | $(J/cm^3)^{0.5}$ | 18.9 | 18.9 | 18.9 | 28.8 | 18.9 |
| | | Content | parts by weight | 10 | 20 | 30 | 10 | 30 |
| | Absolute value of difference between SP value of first plasticizer and SP value of second plasticizer in second and third layers | | $(J/cm^3)^{0.5}$ | 2.0 | 2.0 | 2.0 | 11.9 | 2.0 |
| | Absolute value of difference between SP value of thermoplastic resin and SP value of second plasticizer in second and third layers | | $(J/cm^3)^{0.5}$ | 8.7 | 8.7 | 8.7 | 1.2 | 8.7 |
| | Content of second plasticizer in 100% by weight of plasticizer in second and third layers | | % by weight | 25 | 50 | 75 | 25 | 75 |
| | Visible light transmittance | | % | 87.8 | 88.2 | 88.1 | 88.4 | 88.1 |

(continued)

| | | | | Example 1 | Example 2 | Example 3 | Example 4 | Example 5 |
|---|---|---|---|---|---|---|---|---|
| Evaluation | Color migration | Visible light transmittance of non-colored layer for color migration test | % | 87.8 | 88.2 | 88.1 | 88.4 | 88.1 |
| | | ΔE | - | 7.4 | 4.2 | 1.6 | 6.9 | 5.0 |
| | | | - | ○ | 00 | 00 | ○ | 00 |
| | Glass transition temperature (Tg) | First layer | °C | 26.0 | 27.7 | 28.7 | 25.3 | 26.2 |
| | | | - | ○ | ○ | ○ | ○ | ○ |
| | | Second and third layers | °C | 26.0 | 27.7 | 28.7 | 25.3 | 28.7 |
| | | | - | ○ | ○ | ○ | ○ | ○ |

[Table 2]

| | | | | Comparative Example 1 | Comparative Example 2 | Comparative Example 3 | Comparative Example 4 | Comparative Example 5 |
|---|---|---|---|---|---|---|---|---|
| First layer (colored layer) | Thermoplastic resin | Kind | - | PVB | PVB | PVB | PVB | PVB |
| | | Solubility parameter (SP value) | $(J/cm^3)^{0.5}$ | 27.6 | 27.6 | 27.6 | 27.6 | 27.6 |
| | | Content | parts by weight | 100 | 100 | 100 | 100 | 100 |
| | First plasticizer | Kind | - | 3GO | 3GO | 3GO | - | - |
| | | Solubility parameter (SP value) | $(J/cm^3)^{0.5}$ | 16.9 | 16.9 | 16.9 | - | - |
| | | Content | parts by weight | 40 | 33 | 30 | - | - |
| | Second plasticizer | Kind | - | - | - | - | OD-X2586 | TMP |
| | | Solubility parameter (SP value) | $(J/cm^3)^{0.5}$ | - | - | - | 18.9 | 28.8 |
| | | Content | parts by weight | - | - | - | 40 | 40 |
| | Absolute value of difference between SP value of first plasticizer and SP value of second plasticizer in first layer | | $(J/cm^3)^{0.5}$ | - | - | - | - | - |
| | Absolute value of difference between SP value of thermoplastic resin and SP value of second plasticizer in first layer | | $(J/cm^3)^{0.5}$ | - | - | - | 8 . 7 | 1.2 |
| | Content of second plasticizer in 100% by weight of plasticizer in first layer | | % by weight | 0 | 0 | 0 | 100 | 100 |
| | Visible light transmittance | | % | 5.09 | 5.20 | 4.64 | 4.08 | 4.51 |

(continued)

| | | | | Comparative Example 1 | Comparative Example 2 | Comparative Example 3 | Comparative Example 4 | Comparative Example 5 |
|---|---|---|---|---|---|---|---|---|
| Second layer Third layer (non-colored layer) | Thermoplastic resin | Kind | - | PVB | PVB | PVB | PVB | PVB |
| | | Solubility parameter (SP value) | $(J/cm^3)^{0.5}$ | 27.6 | 27.6 | 27.6 | 27.6 | 27.6 |
| | | Content | parts by weight | 100 | 100 | 100 | 100 | 100 |
| | First plasticizer | Kind | - | 3GO | 3GO | 3GO | - | - |
| | | Solubility parameter (SP value) | $(J/cm^3)^{0.5}$ | 16.9 | 16.9 | 16.9 | - | - |
| | | Content | parts by weight | 40 | 33 | 30 | - | - |
| | Second plasticizer | Kind | - | - | - | - | OD-X2586 | TMP |
| | | Solubility parameter (SP value) | $(J/cm^3)^{0.5}$ | - | - | - | 18.9 | 28.8 |
| | | Content | parts by weight | - | - | - | 40 | 40 |
| | Absolute value of difference between SP value of first plasticizer and SP value of second plasticizer in second and third layers | | $(J/cm^3)^{0.5}$ | - | - | - | - | - |
| | Absolute value of difference between SP value of thermoplastic resin and SP value of second olasticizer in second and third layers | | $(J/cm^3)^{0.5}$ | - | - | - | 8.7 | 1.2 |
| | Content of second plasticizer in 100% by weight of plasticizer in second and third layers | | % by weight | 0 | 0 | 0 | 100 | 100 |
| | Visible light transmittance | | % | 88.9 | 88.9 | 88.9 | 87.7 | 88.2 |

(continued)

| | | | | Comparative Example 1 | Comparative Example 2 | Comparative Example 3 | Comparative Example 4 | Comparative Example 5 |
|---|---|---|---|---|---|---|---|---|
| Evaluation | Color migration | Visible light transmittance of non-colored layer for color migration test | % | 88.9 | 88.9 | 88.9 | 87.7 | 88.2 |
| | | ΔE | - | 13.3 | 8.3 | 6.3 | 1. 7 | 0.4 |
| | | | - | × | × | ○ | 00 | 00 |
| | Glass transition temperature (Tg) | First layer | °C | 26.2 | 30.6 | 34.2 | 31.3 | 31.8 |
| | | | - | ○ | × | × | × | × |
| | | Second and third layers | °C | 26.2 | 30.6 | 34.2 | 31.3 | 31.8 |
| | | | - | ○ | × | × | × | × |

## EXPLANATION OF SYMBOLS

1, 1B: First layer
1a: First surface
1b: Second surface
2, 2B: Second layer
3, 3B: Third layer
11, 11A, 11B: Interlayer film
11a: One end
11b: Other end
21: First lamination glass member
22: Second lamination glass member
31, 31A: Laminated glass
R1: Region for display
R2: Surrounding region
R3: Shading region

## Claims

**1.** An interlayer film for laminated glass comprising:

a thermoplastic resin;
a first plasticizer having a solubility parameter of less than 18.0 $(J/cm^3)^{0.5}$; and
a second plasticizer having a solubility parameter of 18.0 $(J/cm^3)^{0.5}$ or more.

**2.** The interlayer film for laminated glass according to claim 1, comprising a layer X containing the first plasticizer and the second plasticizer.

**3.** The interlayer film for laminated glass according to claim 1 or 2, wherein

the first plasticizer has a solubility parameter of 15.0 $(J/cm^3)^{0.5}$ or more, and
the second plasticizer has a solubility parameter of 18.5 $(J/cm^3)^{0.5}$ or more and 30.0 $(J/cm^3)^{0.5}$ or less.

**4.** The interlayer film for laminated glass according to any one of claims 1 to 3, wherein an absolute value of difference between solubility parameter of the second plasticizer and solubility parameter of the first plasticizer is 0.5 $(J/cm^3)^{0.5}$ or more.

**5.** The interlayer film for laminated glass according to any one of claims 1 to 4, wherein the first plasticizer is triethylene glycol di-2-ethylhexanoate, triethylene glycol di-2-ethylbutyrate, or triethylene glycol di-n-butanoate.

**6.** The interlayer film for laminated glass according to any one of claims 1 to 5, wherein the second plasticizer is trimethylolpropane, triethylene glycol, 3-(2-ethylhexyloxy)-1,2-propanediol, or polycaprolactone triol represented by a formula (P) below:

[Chemical 1]

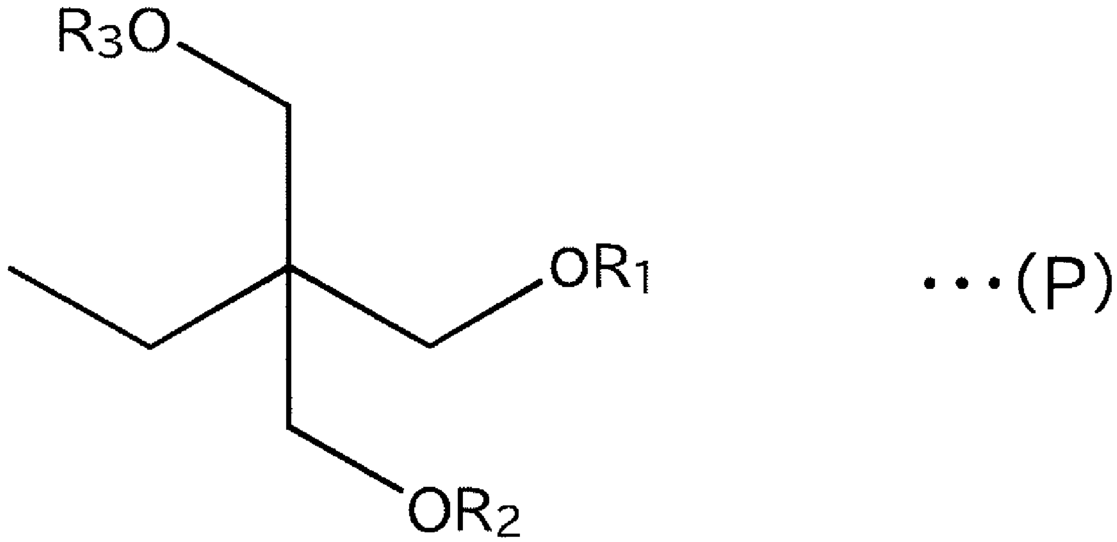

where in the formula (P), $R_1$ to $R_3$ each representing a group represented by a formula (P1) below:

[Chemical 2]

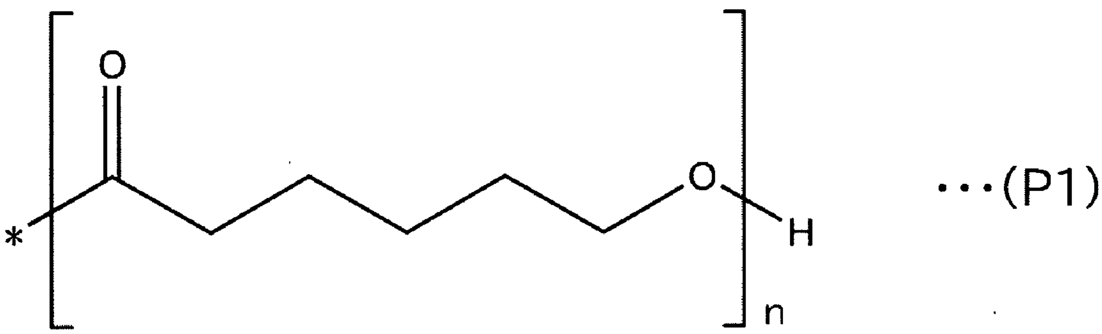

where in the formula (P1), n representing a numeral of 1 or more and 5 or less, and * representing a bonding position with an oxygen atom.

**7.** The interlayer film for laminated glass according to any one of claims 1 to 6, comprising a layer X containing the first plasticizer and the second plasticizer, wherein in 100% by weight of the plasticizer contained in the layer X, a content of the second plasticizer is 20% by weight or more and 80% by weight or less.

**8.** The interlayer film for laminated glass according to any one of claims 1 to 7, comprising a layer X containing the first plasticizer and the second plasticizer, wherein

the layer X contains the thermoplastic resin, and
an absolute value of difference between solubility parameter of the thermoplastic resin contained in the layer X and solubility parameter of the second plasticizer contained in the layer X is 9.0 $(J/cm^3)^{0.5}$ or less.

**9.** The interlayer film for laminated glass according to any one of claims 1 to 8, comprising a coloring agent.

**10.** The interlayer film for laminated glass according to claim 9, wherein the coloring agent is a dye.

**11.** A laminated glass comprising:

a first lamination glass member;
a second lamination glass member; and
the interlayer film for laminated glass according to any one of claims 1 to 10,
the interlayer film for laminated glass being arranged between the first lamination glass member and the second lamination glass member.

[FIG. 1]

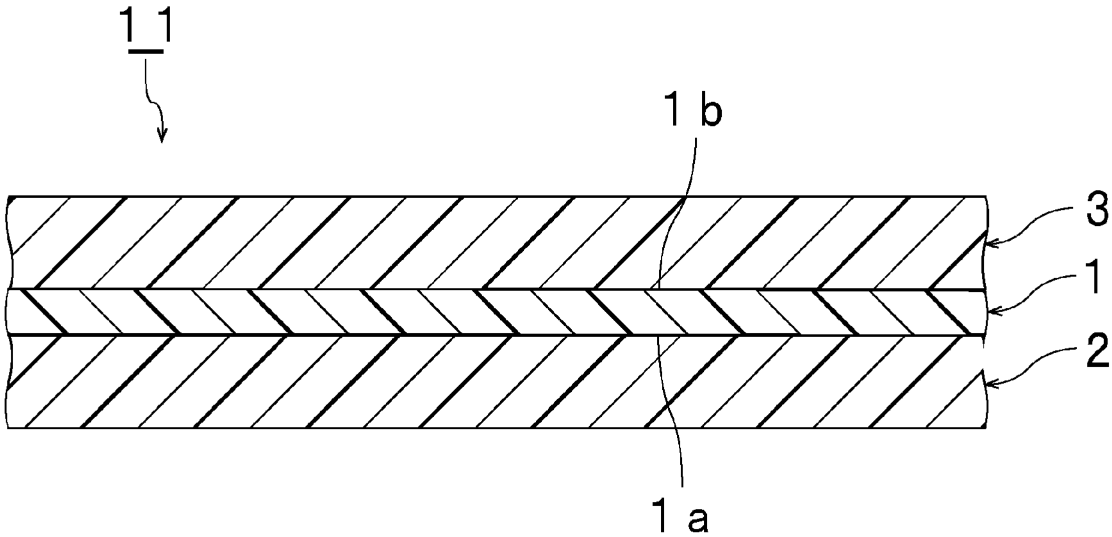


[FIG. 2]

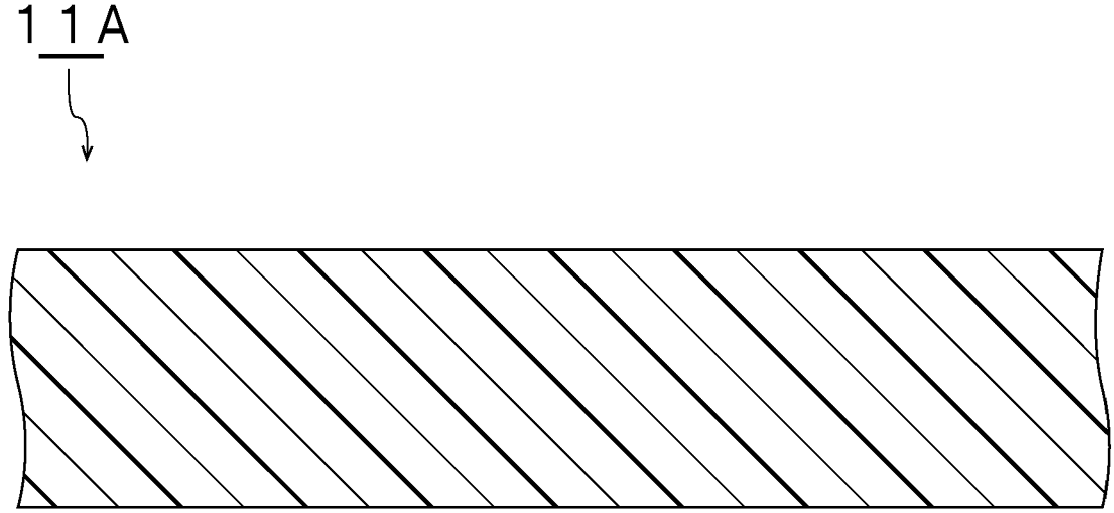

[FIG. 3]

(a)

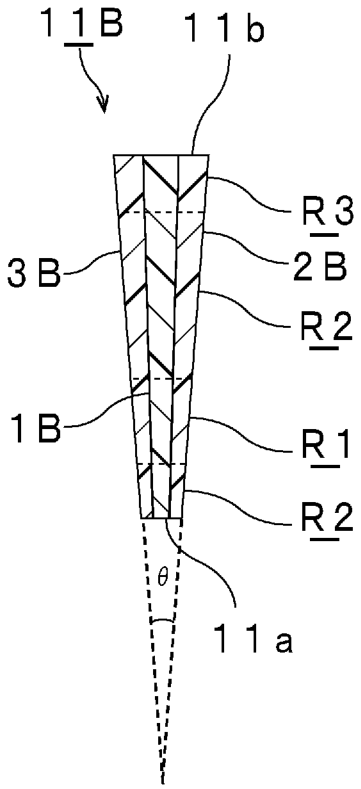


(b)

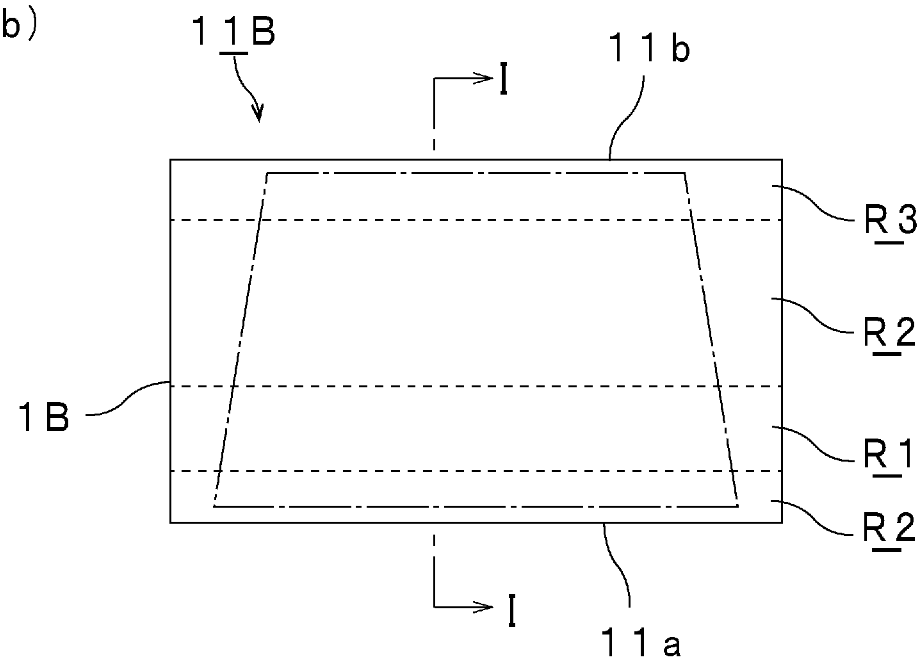

[FIG. 4]

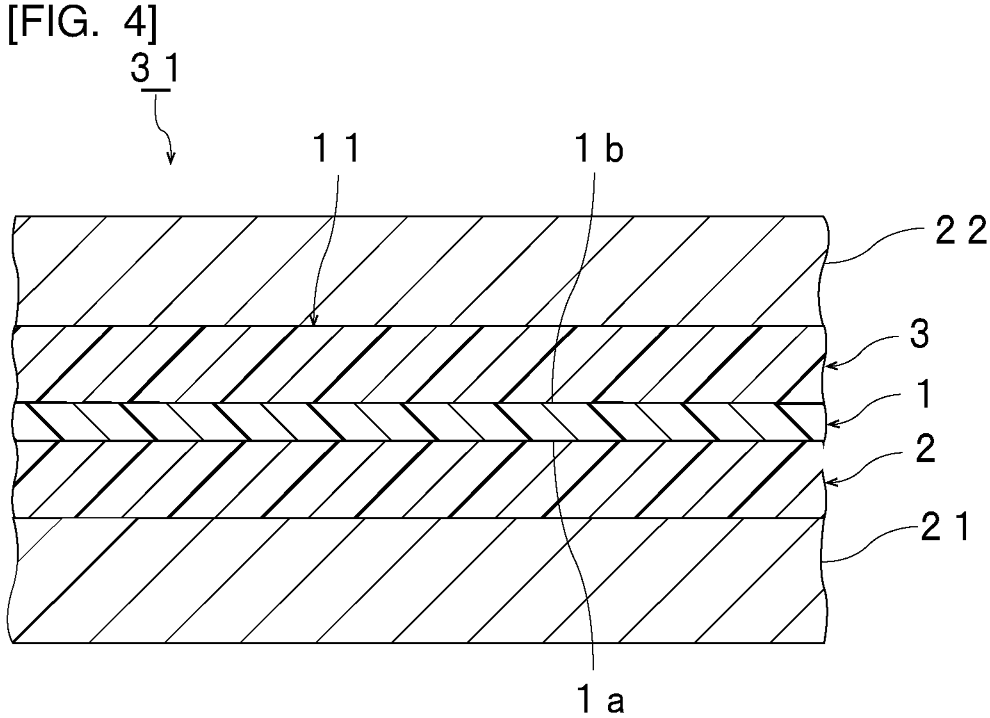


[FIG. 5]

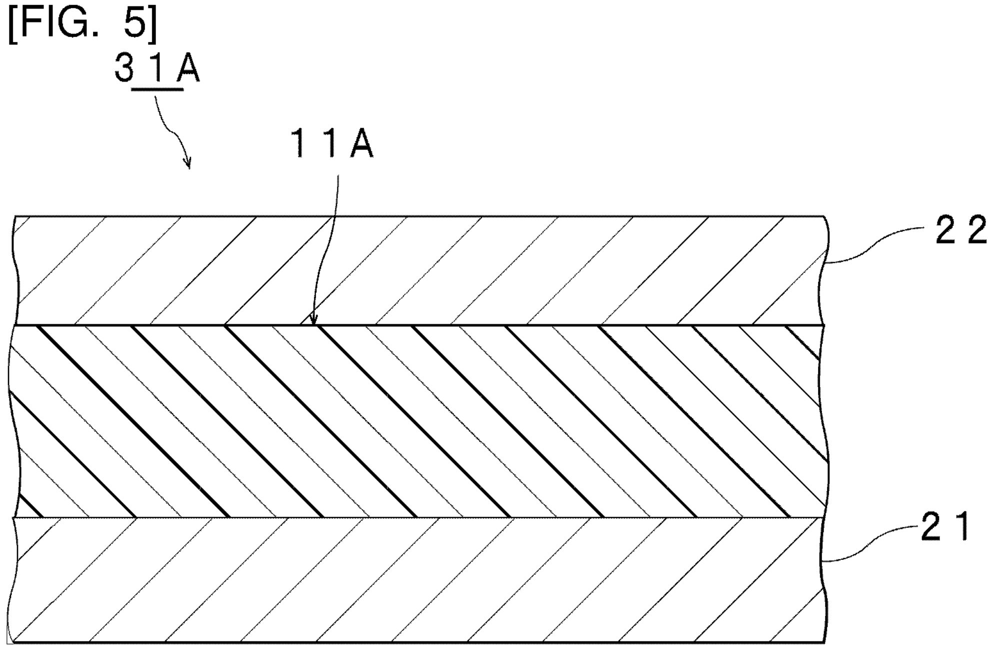

**INTERNATIONAL SEARCH REPORT**

International application No.
**PCT/JP2022/044166**

**A. CLASSIFICATION OF SUBJECT MATTER**

***C03C 27/12***(2006.01)i; ***B32B 17/10***(2006.01)i; ***B32B 27/20***(2006.01)i; ***B32B 27/22***(2006.01)i
FI: C03C27/12 D; C03C27/12 N; B32B17/10; B32B27/22; B32B27/20 A

According to International Patent Classification (IPC) or to both national classification and IPC

**B. FIELDS SEARCHED**

Minimum documentation searched (classification system followed by classification symbols)

C03C15/00-23/00; B32B1/00-43/00; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-121768 A (SEKISUI CHEMICAL CO., LTD.) 28 June 2012 (2012-06-28) paragraphs [0007]-[0018], [0030]-[0042], example 4 | 1, 3-6, 9-11 |
| Y | | 9-10 |
| A | | 2, 7–8 |
| X | WO 2006/004162 A1 (SEKISUI CHEMICAL CO., LTD.) 12 January 2006 (2006-01-12) paragraphs [0012]-[0021], [0027]-[0031], [0036], [0056]-[0102] | 1-5, 7-8, 11 |
| Y | | 9-10 |
| A | | 6 |
| A | JP 2011-46559 A (SEKISUI CHEMICAL CO., LTD.) 10 March 2011 (2011-03-10) entire text | 1-11 |
| A | WO 2016/158882 A1 (KURARAY CO., LTD.) 06 October 2016 (2016-10-06) entire text | 1-11 |
| A | JP 2011-503258 A (SOLUTIA INC.) 27 January 2011 (2011-01-27) entire text | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2023** | **14 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/044166**

**C. DOCUMENTS CONSIDERED TO BE RELEVANT**

| Category* | Citation of document, with indication, where appropriate, of the relevant passages | Relevant to claim No. |
|---|---|---|
| A | JP 2008-509828 A (KURARAY EUROPE GMBH) 03 April 2008 (2008-04-03)<br>entire text | 1-11 |
| A | WO 2012/043819 A1 (SEKISUI CHEMICAL CO., LTD.) 05 April 2012 (2012-04-05)<br>entire text | 1-11 |
| A | JP 2008-119927 A (BRIDGESTONE CORP.) 29 May 2008 (2008-05-29)<br>entire text | 1-11 |
| A | WO 2018/182029 A1 (SEKISUI CHEMICAL CO., LTD.) 04 October 2018 (2018-10-04)<br>entire text | 1-11 |

Form PCT/ISA/210 (second sheet) (January 2015)

**INTERNATIONAL SEARCH REPORT**
**Information on patent family members**

International application No.
**PCT/JP2022/044166**

| Patent document cited in search report | Publication date (day/month/year) | Patent family member(s) | Publication date (day/month/year) |
|---|---|---|---|
| JP 2012-121768 A | 28 June 2012 | (Family: none) | |
| WO 2006/004162 A1 | 12 January 2006 | US 2007/0172642 A1<br>paragraphs [0018]-[0035], [0041]-[0047], [0055], [0092]-[0155]<br>EP 1785404 A1<br>CN 1964928 A<br>KR 10-2007-0030313 A | |
| JP 2011-46559 A | 10 March 2011 | (Family: none) | |
| WO 2016/158882 A1 | 06 October 2016 | US 2018/0104931 A1<br>entire text<br>EP 3275934 A1<br>CN 107406653 A<br>KR 10-2017-0131445 A | |
| JP 2011-503258 A | 27 January 2011 | US 2009/0118437 A1<br>entire text<br>EP 2231398 A1<br>WO 2009/061626 A1 | |
| JP 2008-509828 A | 03 April 2008 | US 2008/0163977 A1<br>entire text<br>EP 1784305 A1<br>WO 2006/018419 A1 | |
| WO 2012/043819 A1 | 05 April 2012 | US 2013/0183532 A1<br>entire text<br>EP 2623474 A1<br>CN 103140451 A | |
| JP 2008-119927 A | 29 May 2008 | (Family: none) | |
| WO 2018/182029 A1 | 04 October 2018 | US 2020/0009837 A1<br>entire text<br>EP 3604249 A1<br>CN 109890776 A<br>KR 10-2019-0132981 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018187929 A